(19) Europäisches Patentamt

European Patent Office

Office européen des brevets

(11) **EP 1 684 505 A2**

(12) **EUROPEAN PATENT APPLICATION**

(43) Date of publication:
26.07.2006 Bulletin 2006/30

(51) Int Cl.:
*H04N 5/243* (2006.01)

(21) Application number: 06250374.3

(22) Date of filing: 24.01.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 25.01.2005 JP 2005017425
12.12.2005 JP 2005358269

(71) Applicant: SHARP KABUSHIKI KAISHA
Osaka-shi, Osaka 545-8522 (JP)

(72) Inventors:
• **Shibano, Toshinobu**
**Nara-shi**
**Nara 631-0823 (JP)**
• **Hashiguchi, Kazuo**
**Ikoma-shi**
**Nara 630-0121 (JP)**

(74) Representative: **Brown, Kenneth Richard et al**
**R.G.C. Jenkins & Co.**
**26 Caxton Street**
**London SW1H 0RJ (GB)**

(54) **Brightness level converting apparatus and method**

(57) A brightness level converting apparatus improves a contrast of an image represented by an image pickup signal output from a logarithmic conversion solid-state image pickup device, so as to obtain a natural image. For this purpose, the brightness level converting apparatus converts brightness levels in the image pickup signal output from the solid-state image pickup device which logarithmically converts an incident light quantity. In the brightness level converting apparatus, a brightness level converting section converts the brightness levels in the image pickup signal by using a brightness level converting function expressed by an S-shaped curve which indicates the relation between an input brightness level and an output brightness level and includes one inflexion point. Therefore, the contrast in a low brightness level range in the image pickup signal is reduced. At the same time, the contrast in a high brightness level range is reduced while appropriately keeping a gradation. With this, the contrast in an intermediate brightness level range in the image pickup signal is improved considerably.

Therefore, the image represented by the image pickup signal whose brightness levels are converted becomes a further natural image.

**FIG. 1**

**Description**

FIELD OF THE INVENTION

The present invention relates to (I) a brightness level converting apparatus for converting brightness levels in an image pickup signal output from a logarithmic conversion solid-state image pickup device, (II) a method for converting the brightness levels, (III) a solid-state image pickup apparatus, (IV) a program for converting the brightness levels, and (V) a recording medium.

BACKGROUND OF THE INVENTION

Presently, photographic devices, such as digital still cameras and movie cameras, are widely prevalent. Such photographic device usually includes a CCD (Charge Coupled Device) as a solid-state image pickup device for imaging a subject. In the CCD, a dynamic range for incident light that is convertible to the image pickup signal is usually narrow. On this account, there might be unwanted white area and/or black area in an image of the subject imaged by the CCD. Since these white area and black area deteriorate the quality of the image, it is preferable to suppress the generation of the white area and the black area as much as possible.

Here, in order to solve such problem, a logarithmic conversion solid-state image pickup device is used. The logarithmic conversion solid-state image pickup device logarithmically converts an incident light quantity so as to output the image pickup signal. This kind of solid-state image pickup device generally utilizes a current characteristic in a weak inversion area of a MOS transistor. Therefore, this kind of solid-state image pickup device converts a wide range of incident light quantities and outputs the image pickup signal.

Normally, the image pickup signal is supplied to an image displaying apparatus, such as a CRT (Cathode Ray Tube) or a liquid crystal monitor, to display an image shot by the photographic device. Thus, the image displaying apparatus displays an image or a video expressed by the image pickup signal. However, a problem explained below arises when the image displaying apparatus displays such image or video without modification.

Generally, a digital camera or the video camera shoots the subject in a circumstance having a normal, narrow light quantity range. Here, the logarithmic conversion solid-state image pickup device reduces the light quantity in the dynamic range which is 1,000 or more times wider than a display dynamic range of the image displaying apparatus. Therefore, when the image displaying apparatus performs displaying by using the image pickup signal, without modification, supplied from the logarithmic conversion solid-state image pickup device, the image displaying apparatus displays the image or video with extremely low contrast. In such image or video, it may be difficult to find out what subject is displayed by the image displaying apparatus.

Here, Japanese Unexamined Patent Application No. 28714/2001 (Tokukai 2001-28714, published on January 30, 2001) discloses a method for improving the above-described problem. That is, this Document discloses a method for performing level conversion on signals output from logarithmic conversion photoelectric conversion means in such a way that a brightness range of a subject is adapted to a dynamic range of an output device used to reproduce an image. According to this conventional method, a partial brightness level range is cut from an entire brightness level range of the image pickup signal obtained by the solid-state image pickup device, and a contrast is extended linearly. Thus, the brightness levels are converted.

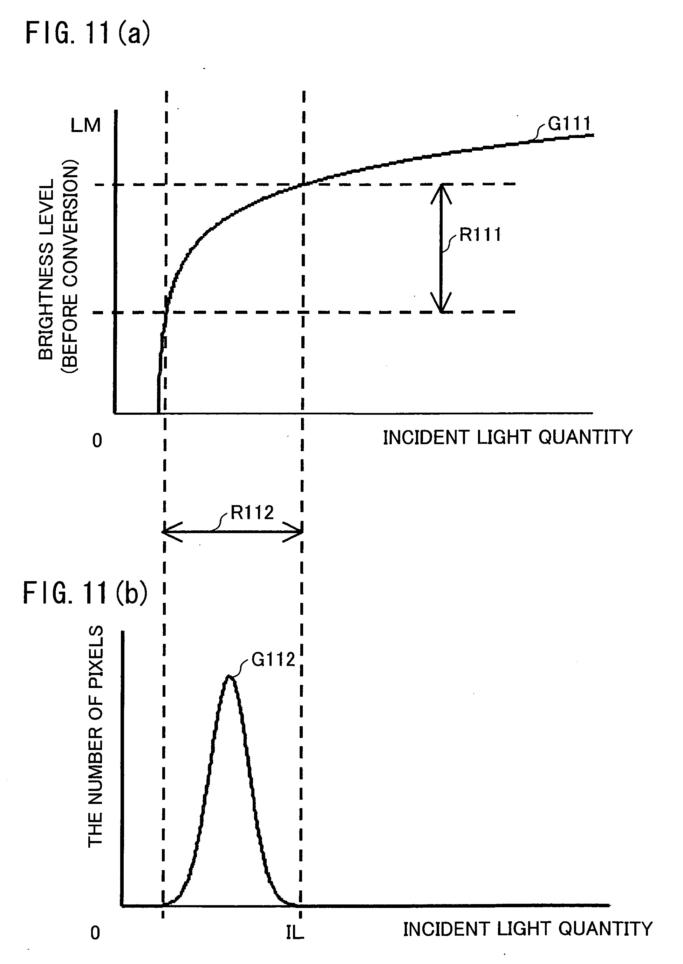

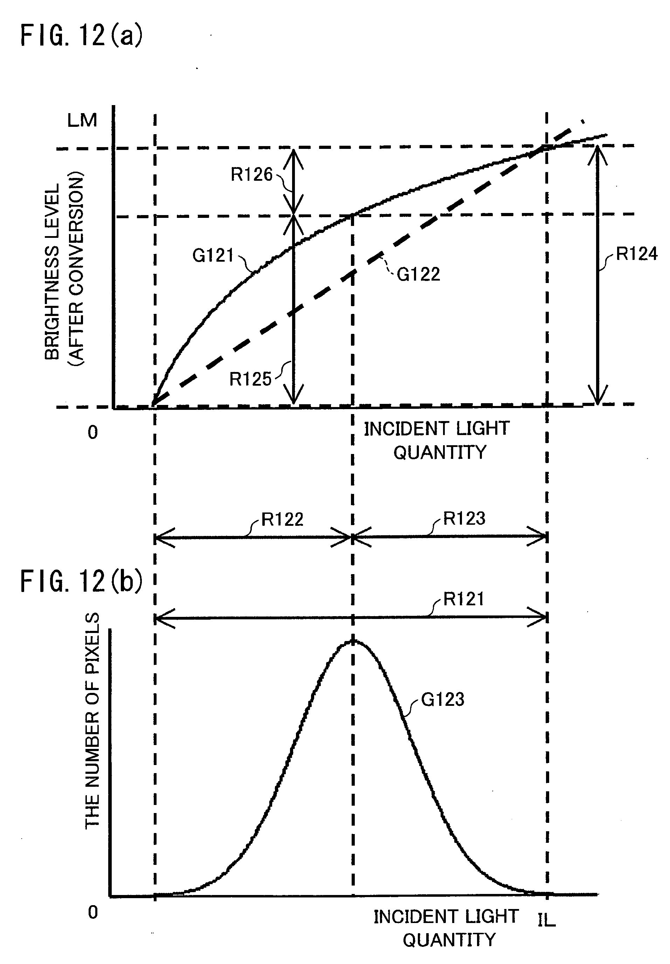

Referring to FIGS. 11(a), 11(b), 12(a) and 12(b), the following will explain details of the conventional method for converting the brightness levels. FIG. 11(a) is a graph showing the relation (light response characteristic) between the incident light quantity and the brightness level in the logarithmic conversion solid-state image pickup device. FIG. 11(b) is a histogram showing one example of the relation (incident light quantity distribution) between the incident light quantity and the number of pixels in the logarithmic conversion solid-state image pickup device.

According to a curve G111 shown in FIG. 11 (a), the horizontal axis indicates the incident light quantity and the vertical axis indicates the brightness level. In addition, LM indicates the highest brightness level in the image pickup signal obtained from the solid-state image pickup device. As shown in FIG. 11 (a), the relation between the incident light quantity and the brightness level that is not converted yet is expressed by a logarithmic curve.

In an example shown in FIGS. 11(a), 11(b), 12(a) and 12(b), the solid-state image pickup device samples and quantizes the incident light quantity per pixel, so as to output as the image pickup signal. Therefore, according to a curve G 112 shown in FIG. 11(b), the vertical axis indicates the number of pixels and the horizontal axis indicates the incident light quantity.

As shown in FIG. 11(a) and 11(b), the solid-state image pickup device outputs the image pickup signal whose brightness levels are within a range R111 corresponding to an incident light quantity distribution range R112. As shown in FIG. 11(a), the brightness level range R111 occupies just a part of the curve G111. Therefore, if, when performing an image display based on an output image pickup signal from the solid-state image pickup device, the entire output dynamic range of the solid-state image pickup device is so set as to be within the dynamic range of the image displaying apparatus, there occurs a problem in that the image with low contrast is displayed.

Here, according to the conventional method disclosed in the above-described Document, the contrast is improved. Specifically, when converting the brightness levels in the image pickup signal output from the solid-state image pickup device, the incident light quantity distribution range R112 is so set as to be within the entire dynamic range of the image displaying apparatus. FIGS. 12(a) and 12(b) show one example of such brightness level conversion.

FIG. 12(a) is a graph showing the relation between the incident light quantity and the converted brightness level in the image pickup signal whose brightness levels are converted by the conventional method. FIG. 12(b) is a histogram showing the relation between the incident light quantity and the number of pixels. Here, LM indicates the highest brightness level in the image pickup signal whose brightness levels are converted. In addition, IL indicates the maximum value of the incident light quantity. In FIG. 12(b), a scale of the horizontal axis in the graph shown in FIG. 11 (b) is partially enlarged. Therefore, in FIG. 12(b), the maximum incident light quantity IL shifts to the right of the horizontal axis, as compared with FIG. 11(b).

The brightness level range R111 before the conversion of the brightness level is linearly extended so as to be a range corresponding to an almost entire range R124, as shown in FIG. 12(a). The range R124 almost completely covers the output dynamic range of the solid-state image pickup device. Therefore, when the image displaying apparatus displays the image represented by the image pickup signal, the output dynamic range of the solid-state image pickup device is completely within the dynamic range of the image displaying apparatus. That is, the image pickup signal corresponding to the incident light quantity range R121 shown in FIG. 12(b) is displayed by using the entire dynamic range of the image displaying apparatus. Thus, the image displaying apparatus displays the image with better contrast than the contrast obtained when the brightness levels are not converted.

However, in the logarithmic conversion solid-state image pickup device, the image pickup signal is logarithmically compressed. Therefore, in a curve G121 shown in FIG. 12(a), an inverse gamma-like characteristic derived from the logarithmic characteristic of the solid-state image pickup device remains in the relation between the incident light quantity and the converted brightness level. When the image displaying apparatus displays the image represented by such image pickup signal, the following problem arises.

According to the conventional method disclosed in the above-described Document, the brightness levels in a range in which the incident light quantity is small among the brightness levels in the range R121 shown in FIG. 12(b), that is, the brightness levels in a range R122 are converted into the brightness levels in a range R125 shown in FIG. 12 (a). Meanwhile, the brightness levels in a range in which the incident light quantity is large among the brightness levels in the range R121 shown in FIG. 12(b), that is, the brightness levels in a range R123 are converted into the brightness levels in a range R126 shown in FIG. 12(a). Here, the range R125 covers a wider brightness level range than the range R126. Therefore, the contrast is emphasized in a dark area in the image picked up by the solid-state image pickup device, while the contrast is reduced in a brighter area in the image.

Moreover, as shown in FIG. 12(a), the curve G121 slopes further steeply in the range in which the incident light quantity is small. Therefore, the darker the condition under which the logarithmic conversion solid-state image pickup device picks up the subject is, the wider a low brightness level range of the image pickup signal whose brightness levels are converted becomes. Thus, the contrast is emphasized. Therefore, as long as the incident light quantity does not distribute in a darker range, the contrast obtained after converting the brightness levels is reduced in most area in the picked-up image.

Therefore, in the case of converting the brightness levels in the image pickup signal by using the conventional method disclosed in the above-described Document, the image obtained is entirely unnatural, gives poor impression, and has a blurred contrast as compared with the case of converting the brightness levels in the image pickup signal by using a curve G122 that is a straight line indicating the relation between the incident light quantity and the brightness level. Here, using information such as characters and graphics in the image or video shot, human or machines may make some kind of judgment. In such a case, if the brightness levels are converted by using the conventional method described above, human or machines may make a wrong judgment on the basis of the image whose gradation property deteriorates after converting the brightness levels. On this account, there may be a possibility that a serious trouble or accident occurs.

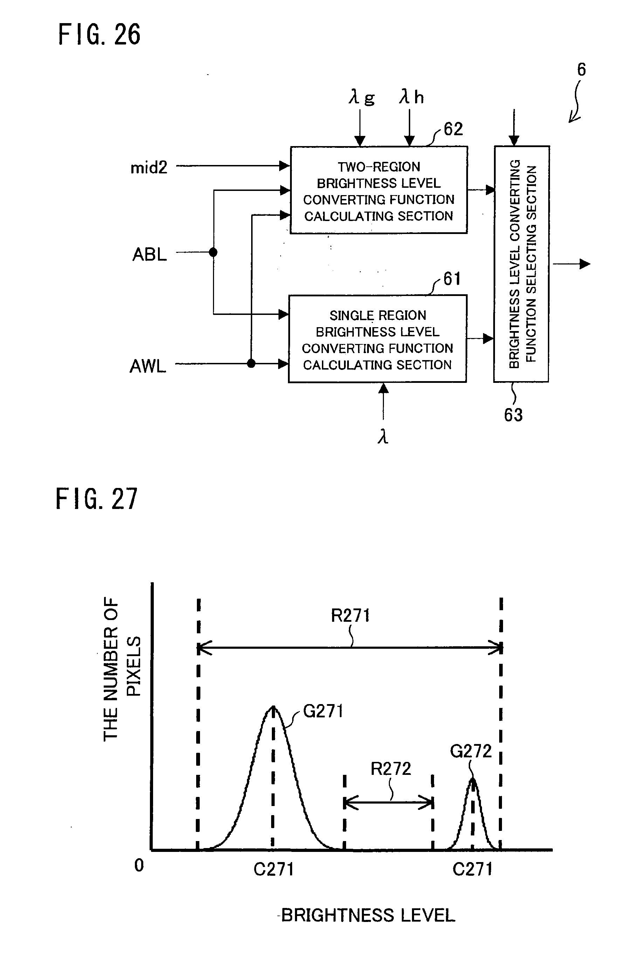

A similar problem occurs in an example shown in FIG. 27. FIG. 27 is a histogram showing the relation, between the brightness level and the number of pixels in the image pickup signal, in the image obtained by imaging a dark subject and a bright subject together by the logarithmic conversion solid-state image pickup device. Note that the difference in the light quantity is large between the dark subject and the bright subject. Two subjects between which the difference in the light quantity is large are, for example, a sight inside a tunnel and a sight outside the tunnel and under the sunlight. Another example is a sight inside a room with windows and a sight outside the windows and under the sunlight. Here, the solid-state image pickup device picks up these subjects together in the same imaging surface.

The following will explain an example in which the solid-state image pickup device picks up a scenery around the end of the tunnel. FIG. 27 shows the relation between the brightness level and the number of pixels in the image picked up by the solid-state image pickup device. In FIG. 27, a curve G271 shows a brightness level distribution expressing a sight inside the tunnel in the image, while a curve G272 shows a brightness level distribution expressing a sight outside the tunnel in the image.

When the logarithmic conversion solid-state image pickup device picks up together the dark subject and the bright subject between which the difference in the light quantity is large, the range of the quantity of light incident on the logarithmic conversion solid-state image pickup device is very wide. Therefore, the logarithmic conversion solid-state image pickup device obtains the image pickup signal including the brightness levels of a wide range including brightness level distributions of the curve G271 and the curve G272. This is because, unlike the CCD, the logarithmic conversion solid-state image pickup device has the wide dynamic range for the incident light.

The conventional method disclosed in the above-described Document goes through the following steps to convert the brightness levels in the image pickup signal having the brightness level distribution shown in FIG. 27. That is, it is possible to linearly covert the brightness level in an entire range R271 of the brightness levels in the image pickup signal. As shown in FIG. 27, the entire range R271 includes a partial range R272 whose brightness level range is narrower. Here, even after the brightness levels are converted, the proportion of the partial range R272 to the entire range R271 does not change.

Therefore, when the image displaying apparatus reproduces the image pickup signal whose brightness levels are converted, the sight inside the tunnel in the image, that is, the sight corresponding to the curve G271 is displayed as a dark portion with low contrast. Meanwhile, the sight outside the tunnel in the image, that is, the sight corresponding to the curve G272 is displayed as a bright portion with low contrast.

Therefore, the contrast is not enough in both the dark portion and the bright portion in the image displayed. Here, using information such as characters and graphics in the image obtained after converting the brightness levels, human or machines may make some kind of judgment. Again, human or machines may make a wrong judgment on the basis of the image whose gradation deteriorates after converting the brightness levels. On this account, there may be a possibility that a serious trouble or accident occurs.

## SUMMARY OF THE INVENTION

The present invention was made to solve the problem above, and an object of the present invention is to provide (I) a brightness level converting apparatus that improves the contrast of an image represented by an image pickup signal supplied from a logarithmic conversion solid-state image pickup device so as to produce a natural-looking image, (II) a brightness level converting method, (III) a solid-stare image pickup apparatus, (IV) a brightness level converting program, and (V) a recording medium.

To achieve the object above, the brightness level converting apparatus of the present invention, which converts brightness levels in an image pickup signal output from a solid-state image pickup device which logarithmically converts an incident light quantity, is characterized by comprising brightness level converting means for converting the brightness levels in the image pickup signal by using a brightness level converting function expressed by a curve which indicates a relation between an input brightness level and an output brightness level and includes at least one inflexion point.

According to the arrangement above, in the brightness level converting apparatus, the brightness level converting means converts the brightness levels in the image pickup signal, using the brightness level converting function expressed by a curve which indicates the relation between an input brightness level and an output brightness level and includes at least one inflexion point. The inflexion point indicates a point where, on the curve indicating the relation between the input brightness level and the output brightness level, the relation between the increment of the input brightness level and the increment of the output brightness level is switched from increase to decrease. At the inflexion point, the second derivative of the brightness level converting function is zero.

Therefore, according to the brightness level converting function used by the brightness level converting means, the change in the output brightness level, which corresponds to the change in the input brightness level, becomes more significant toward the inflexion point.

In this manner, using the above-described brightness level converting function, the brightness level converting means reduces the contrast of the image pickup signal, except in the input brightness levels around the inflexion point of the brightness level converting function. At the same time, the brightness level converting means significantly improves the contrast in the input brightness levels around the inflexion point of the brightness level converting function. On this account, an image represented by the image pickup signal after being subjected to the brightness level conversion looks natural, as compared to a case where a partial brightness level region of the image pickup signal is cut out and a gradation indicating the degree of changes in the brightness levels of the partial brightness level region is linearly increased.

To achieve the object above, the brightness level converting method of the present invention, for converting brightness levels in an image pickup signal output from a solid-state image pickup device which logarithmically converts an incident light quantity, is characterized by comprising a brightness level converting step of converting the brightness levels in the image pickup signal by using a brightness level converting function expressed by a curve which indicates a relation between an input brightness level and an output brightness level and includes at least one inflexion point.

The method above exerts effects similar to those of the above-described brightness level converting apparatus.

To achieve the object above, the solid-state image pickup apparatus of the present invention is characterized by comprising the above-described brightness level converting apparatus.

According to the arrangement above, it is possible to obtain a solid-state image pickup apparatus that can improve the contrast of an image represented by an image pickup signal supplied from a logarithmic conversion solid-state image pickup device, so as to produce a natural-looking image.

Additional objects, features, and strengths of the present invention will be made clear by the description below. Further, the advantages of the present invention will be evident from the following explanation in reference to the drawings.

BRIEF DESCRIPTION OF THE DRAWINGS

FIG. 1 is a block diagram showing details of a solid-state image pickup apparatus of the present invention.

FIG. 2 is a diagram showing one example of a brightness level converting function used by a brightness level converting section when converting the brightness levels in the image pickup signal.

FIG. 3(a) is a graph showing the relation between a incident light quantity and a brightness level in an image pickup signal whose brightness levels are not yet converted.

FIG. 3(b) is a graph showing the relation between the incident light quantity and the brightness level in the image pickup signal which has the characteristic of a curve shown in FIG. 3(a) and whose brightness levels are converted by using the brightness level converting function of each curve shown in FIG. 2.

FIG. 4 is a graph showing the relation between the input brightness level and the output brightness level in the brightness level converting function that is the quadratic function expressed by Equation (2).

FIG. 5 is a graph showing (I) the relation between the incident light quantity and the brightness level in a curve indicating the relation between the incident light quantity and the brightness level in the image pickup signal whose brightness levels are not yet converted, and (II) the relation between the incident light quantity and the brightness level in a curve obtained by converting the brightness levels of the above-described curve by using a curve shown in FIG. 4.

FIG. 6 is a block diagram showing detailed internal arrangement of an image characteristic extracting section included in the brightness level converting apparatus of the present invention.

FIG. 7 is a diagram for explaining a principle of the operation of a pixel block brightness level calculating section.

FIG. 8(a) is a graph showing one example of a histogram calculated by a histogram calculating section.

FIG. 8(b) is a graph showing one example of a smoothed histogram smoothed by a histogram moving average processing section.

FIG. 9 is a diagram showing one example of the brightness level converting function calculated by a brightness level converting function calculating section.

FIG. 10 is a block diagram showing an arrangement of the brightness level converting section.

FIG. 11(a) is a graph showing the relation (light response characteristic) between the incident light quantity and the brightness level in a logarithmic conversion solid-state image pickup device.

FIG. 11(b) is a histogram showing one example of the relation (incident light quantity distribution) between the incident light quantity and the number of pixels in the logarithmic conversion solid-state image pickup device.

FIG. 12(a) is a graph showing the relation between the incident light quantity and the converted brightness level in the image pickup signal whose brightness levels are converted by a conventional method.

FIG. 12(b) is a histogram showing the relation between the incident light quantity and the number of pixels.

FIG. 13 is a diagram showing one example of the brightness level converting function used by the brightness level converting section when converting the brightness levels in the image pickup signal.

FIG. 14 is one example of a histogram showing the relation between the brightness level and the number of pixels in the image pickup signal whose brightness levels are converted.

FIG. 15 is a block diagram showing detailed internal arrangement of the image characteristic extracting section included in a brightness level converting apparatus of Embodiment 2.

FIG. 16 is a histogram showing the relation between the brightness level and the number of pixels in the image pickup signal that represents the image including both the dark subject and the bright subject between which the difference in the light quantity is large.

FIG. 17 is a diagram showing curves showing the relation between the brightness level and a difference number of pixels calculated by a histogram peak detecting section.

FIG. 18 is a diagram for explaining the operation of a bright region brightness level average calculating section.

FIG. 19 is a diagram showing one example of the sigmoid function g(i) calculated by the converting function calculating section.

FIG. 20 is a diagram showing one example of the sigmoid function h(i) calculated by the converting function calculating section.

FIG. 21 is a diagram showing one example of the brightness level converting function f(i) calculated by the converting function calculating section.

FIG. 22 is a block diagram showing detailed internal arrangement of the image characteristic extracting section included in a brightness level converting apparatus of Embodiment 3.

FIG. 23 is a block diagram showing detailed internal arrangement of a conversion method judging section included in the image characteristic extracting section.

FIG. 24(a) is a histogram showing an example of the relation between an incident light quantity and the number of pixels in an image pickup signal in which the brightness distribution of a dark subject and the brightness distribution of a bright subject are both narrow and hence there is almost no intermediate brightness distribution.

FIG. 24(b) is a histogram showing an example of the relation between an incident light quantity and the number of pixels in an image pickup signal in which the brightness distribution of the dark subject and the brightness distribution of the bright subject are both wide and overlapped with each other and hence there is an intermediate brightness distribution.

FIG. 25(a) shows a case where, on an imaging surface, bright region pixel blocks gather and form a chunk.

FIG. 25(b) shows a case where, on the imaging surface, the bright region pixel blocks are dispersed.

FIG. 26 is a diagram showing an arrangement of a converting function calculating section of Embodiment 3.

FIG. 27 is a histogram showing the relation, between the brightness level and the number of pixels in the image pickup signal, in the image obtained by imaging a dark subject and a bright subject together by the logarithmic conversion solid-state image pickup device.

DESCRIPTION OF THE EMBODIMENTS

[EMBODIMENT 1]

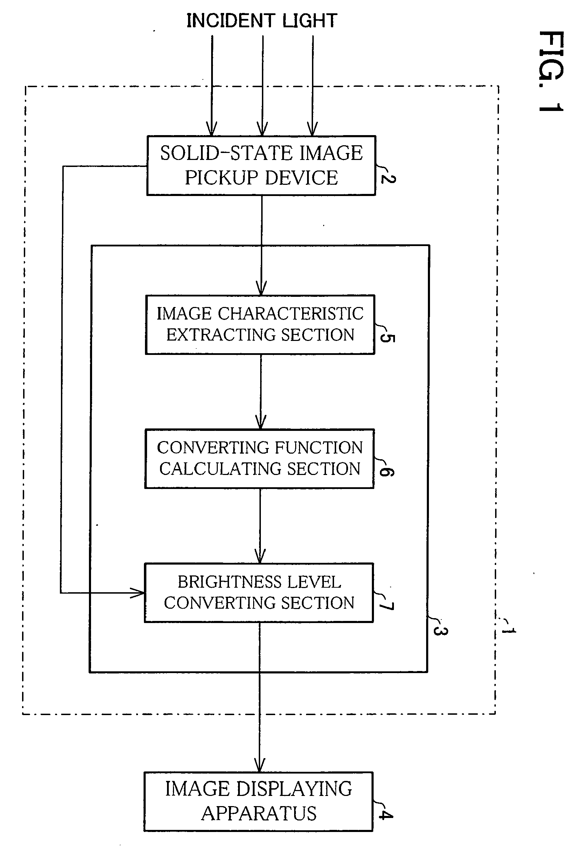

Referring to FIGS. 1 to 10, the following will explain Embodiment 1 of the present invention.

(Brief Overview of Solid-State Image Pickup Apparatus 1)

FIG. 1 is a block diagram showing details of a solid-state image pickup apparatus 1 of the present invention. As shown in FIG. 1, the solid-state image pickup apparatus 1 includes a solid-state image pickup device 2 and a brightness level converting apparatus 3. The solid-state image pickup device 2 is a logarithmic conversion solid-state image pickup device, and it picks up a subject. Specifically, the solid-state image pickup device 2 logarithmically converts the quantity of light into a brightness level. Note that the light is emitted from the subject or reflected by the subject, and then the light is incident on a surface of the solid-state image pickup device 2 through an optical system, such as a lens. Thus, the solid-state image pickup device 2 generated an image pickup signal expressing an image of the subject, and outputs the image pickup signal. Details of this will be described later.

(Details of Brightness Level Converting Apparatus 3)

The brightness level converting apparatus 3 converts the brightness levels in the image pickup signal output from the solid-state image pickup device 2. As shown in FIG. 1, the brightness level converting apparatus 3 includes an image characteristic extracting section 5, a converting function calculating section 6 (function calculating means) and a brightness level converting section 7 (brightness level converting means).
The image characteristic extracting section 5 extracts a characteristic of the image picked up by the solid-state image pickup device 2. Specifically, on the basis of the image pickup signal output from the solid-state image pickup device 2, the image characteristic extracting section 5 generates various parameters indicating the characteristic of the pixel. In the brightness level converting apparatus 3, the converting function calculating section 6 calculates a brightness level converting function used when converting the brightness levels. Details of these will be described later.
The brightness level converting section 7 converts the brightness levels in the image pickup signal by using the brightness level converting function expressed by an S-shaped curve which indicates the relation between an input brightness level and an output brightness level and includes one inflexion point. The brightness level converting function is stored in advance in a storage device (not shown) in the brightness level converting apparatus 3, and the brightness level converting section 7 refers to the brightness level converting function according to need. The storage device may be included in the brightness level converting apparatus 3, or may be an external device that is connected to the brightness level converting apparatus 3.

(Details of Brightness Level Converting Section 7)

In the brightness level converting apparatus 3, the brightness level converting section 7 converts the brightness levels in the image pickup signal by using the brightness level converting function expressed by an S-shaped curve which indicates the relation between the input brightness level and the output brightness level and includes one inflexion point. The expression "S-shaped curve" used here means a curve whose slope becomes steeper toward the inflexion point. In other words, according to the brightness level converting function used by the brightness level converting section 7, the change (increment) in the output brightness level with respect to the change (increment) in the input brightness level becomes more significant toward the inflexion point.

Thus, the brightness level converting section 7 converts the brightness levels in the image pickup signal by using the brightness level converting function having the above-described nature. On this account, the brightness level converting section 7 reduces a contrast in a low brightness level range in the image pickup signal. At the same time, the brightness level converting section 7 reduces the contrast in a high brightness level range while reasonably keeping the gradation. This considerably improves the contrast in an intermediate brightness level range in the image pickup signal. Therefore, the image represented by the image signal whose brightness levels are converted becomes more natural than an image obtained in a case in which a partial brightness level region in the image pickup signal is cut out, and the gradation is extended linearly.

(Details of Brightness Level Converting Function)

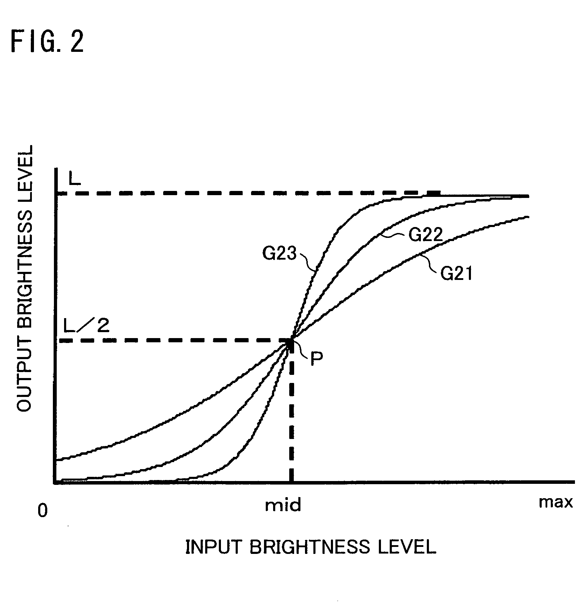

Referring to FIG. 2 to 5, the following will explain details of the brightness level converting function used by the brightness level converting section 7 when converting the brightness levels. FIG. 2 is a diagram showing one example of the brightness level converting function used by the brightness level converting section 7 when converting the brightness levels in the image pickup signal. FIG. 2 shows the brightness level converting function that is a sigmoid function shown by Equation (1) below.

$$f(i) = \frac{L}{1 + e^{-\frac{i - mid}{\mu}}} \qquad \text{Equation (1)}$$

Here, i indicates an input brightness level, f(i) indicates an output brightness level, L indicates the highest brightness level of the output brightness level, e indicates a base of the natural logarithm, max indicates the maximum value of the input brightness level, mid indicates a value that is half the value of max, and $\mu$ indicates a parameter for setting a gradient of a curve expressed by Equation (1).

In FIG. 2, the horizontal axis indicates the input brightness level and the vertical axis indicates the output brightness level. FIG. 2 shows a curve G21, a curve G22 and a curve G23, and $\mu$ of the curve G21 : $\mu$ of the curve G22 : $\mu$ of the curve G23 are 4 : 2 : 1. As shown in FIG. 2, each of the curves G21, G22 and G23 has one inflexion point P (input brightness level = mid, output brightness level L/2). Further, according to the curves G21, G22 and G23, the smaller $\mu$ is, the steeper the slope of the curve whose center is the inflexion point P becomes. Thus, the brightness level converting apparatus 3 appropriately changes the value of the parameter $\mu$. With this, it is possible to appropriately use a plurality of brightness level converting functions whose slopes are different from each other, for example, the curves G21 to G23 shown in FIG. 2.

(One Example of Brightness Level Conversion)

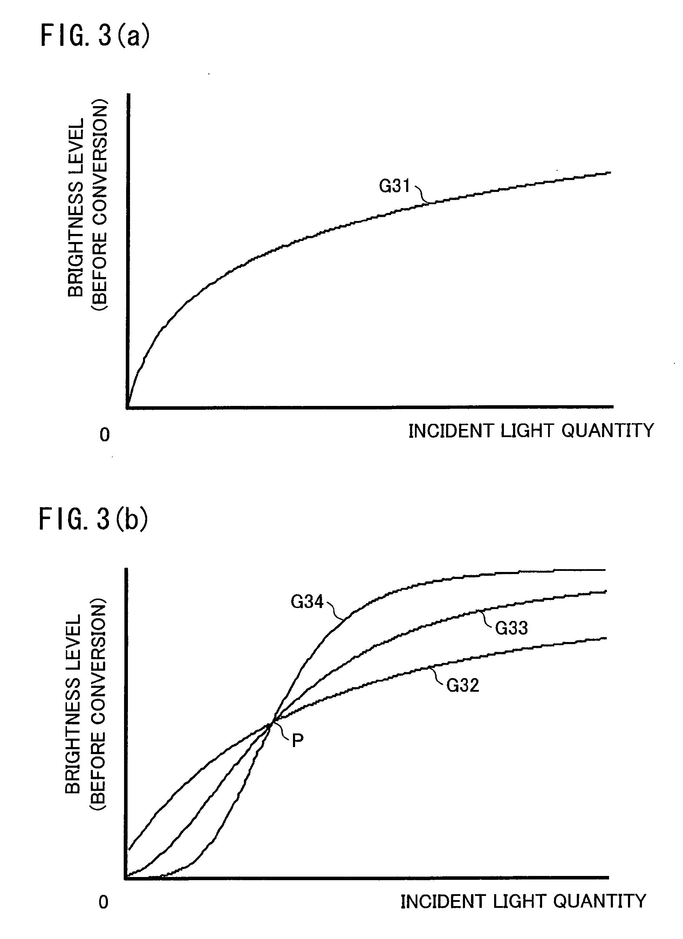

FIGS. 3(a) and 3(b) show one example of a result obtained by converting the brightness levels in the image pickup signal in the brightness level converting apparatus 3 by using the brightness level converting functions of the curves G21 to G23 shown in FIG. 2. FIG. 3(a) is a graph showing the relation between the incident light quantity and the brightness level in the image pickup signal whose brightness levels are not yet converted. FIG. 3(b) is a graph showing the relation between the incident light quantity and the brightness level in the image pickup signal which has the characteristic of a curve G31 shown in FIG. 3(a) and whose brightness levels are converted by using the brightness level converting function of each curve shown in FIG. 2.

In the brightness level converting apparatus 3, the brightness level converting section 7 converts the brightness levels in the image pickup signal by using the brightness level converting functions of the curves G21 to G23. The relation between the incident light quantity and the converted brightness level in the image pickup signal whose brightness levels are converted has a characteristic expressed by a curve (G32, G33 or G34) shown in FIG. 3(b). According to the curve G32, the relation between the incident light quantity and the brightness level has an inverse gamma-like characteristic. According to the curve G33, the relation between the incident light quantity and the brightness level is linear in a range each of whose brightness level is lower than the brightness level of the inflexion point P, while the relation between the incident light quantity and the brightness level has a moderate inversed gamma-like characteristic in a range each of whose brightness level is higher than the brightness level of the inflexion point P. According to the curve G34, the relation between the incident light quantity and the brightness level has a gamma-like characteristic in the range each of whose brightness level is lower than the brightness level of the inflexion point P, while the relation between the incident light quantity and the brightness level has the inversed gamma-like characteristic in the range each of whose brightness is higher than the brightness level of the inflexion point P.

Thus, the brightness level converting apparatus 3 can convert the brightness levels in the image pickup signal by using various different brightness level converting functions shown by the curves G21 to G23. With this, the brightness level converting apparatus 3 can perform, for example, a gamma correction of a CRT by the inverse gamma characteristic, a linearization by an antilogarithm characteristic that is easy to use in a signal processing, etc., and a visual characteristic compensation by a gamma enhancement that is effective for a liquid crystal monitor.

In each of the curves G32 to G34, the relation between the incident light quantity and the brightness level has an inverse gamma-like characteristic in a range each of whose brightness level is higher than the brightness level of the inflexion point P. Therefore, by the brightness level converting apparatus 3 which converts the brightness levels in the image pickup signal by using the brightness level converting functions of the curves G32 to G34, it is possible to suppress the generation of the white area of the subject in the entire range whose brightness levels are high. Further, it is possible to enhance the contrast of the subject in a range which is close to the inflexion point and whose brightness level is high.

Moreover, the curves G32 to G34 shown in FIG. 3(b) are continuous, smooth curves from a low brightness level up to a high brightness level. Therefore, by the brightness level converting apparatus 3 which converts the brightness levels in the image pickup signal by using the brightness level converting functions of the curves G32 to G34, it is possible to prevent the occurrence of an unnatural outline of the image represented by the image pickup signal whose brightness levels are converted. That is, when the image pickup signal whose brightness levels are converted by the brightness level converting apparatus 3 is supplied to the image displaying apparatus such as the CRT or the liquid crystal monitor, the image displaying apparatus displays the image having the natural outline.

(Utilization of Quadratic Function)

Note that in the brightness level converting apparatus 3, the brightness level converting section 7 may convert the brightness levels in the image pickup signal by using the brightness level converting function that is a quadratic function. This quadratic function is also stored in the storage device (not shown) as data. Here, it is preferable that the brightness level converting function used by the brightness level converting section 7 be the quadratic function shown by Equation (2) below.

$$
f(i) \;=\; \begin{cases} 0 & (i < x_1) \\[2mm] \dfrac{2L}{(x_2 - x_1)^2}(i - x_1)^2 & (x_1 \le i < mid) \\[2mm] -\dfrac{2L}{(x_2 - x_1)^2}(i - x_2)^2 & (mid \le i < x_2) \\[2mm] L & (i \ge x_2) \end{cases}
\qquad\qquad \text{Equation (2)}
$$

In Equation (2), i indicates the input brightness level, f(i) indicates the output brightness level, L indicates the highest brightness level of the output brightness level, x1 indicates the minimum value of the input brightness level, x2 indicates the maximum value of the input brightness level, and mid indicates an intermediate point between x1 and x2.

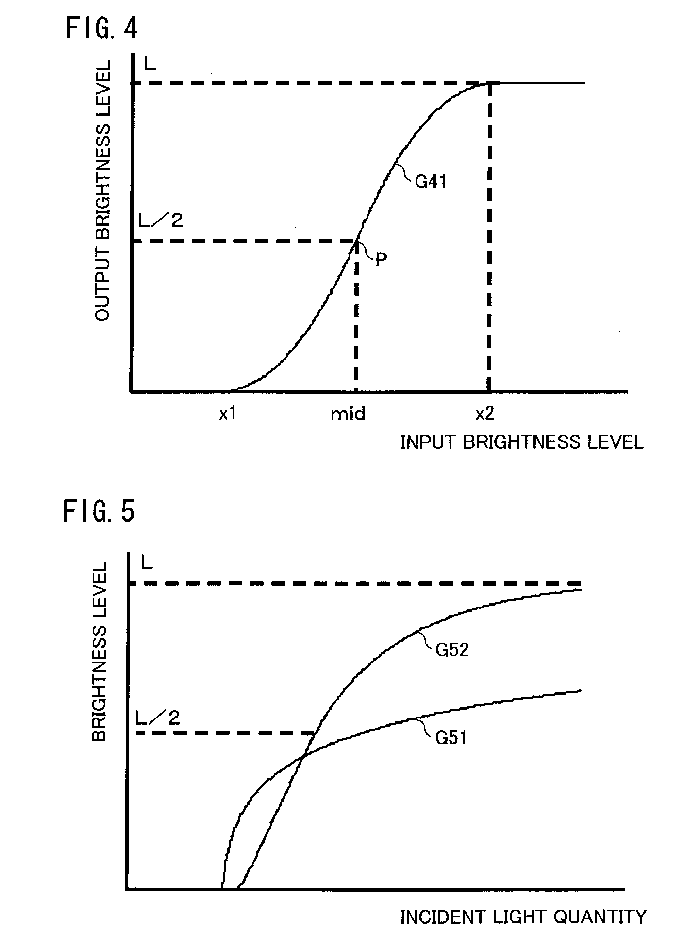

Referring to FIG. 4, the following will explain the characteristic of the brightness level converting function that is the quadratic function shown by Equation (2). FIG. 4 is a graph showing the relation between the input brightness level and the output brightness level in the brightness level converting function that is the quadratic function shown by Equation (2). In FIG. 4, the horizontal axis indicates the input brightness level and the vertical axis indicates the output brightness level. A curve G41 shown in FIG. 4 is an S-shaped curve having one inflexion point P. That is, the S-shaped curve has the inflexion point P at which the output brightness level is L/2 and the input brightness level is mid.

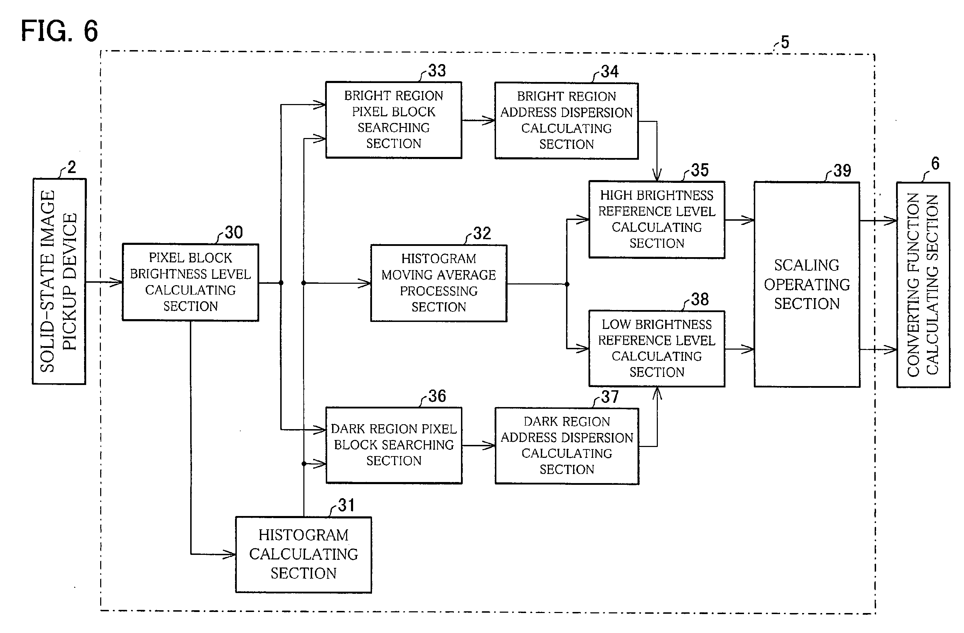

FIG. 5 shows one example of a result obtained by converting the brightness levels in the image pickup signal by using the brightness level converting function that is the quadratic function in the brightness level converting apparatus 3. FIG. 5 is a graph showing (I) the relation between the incident light quantity and the brightness level in a curve G51 indicating the relation between the incident light quantity and the brightness level in the image pickup signal whose brightness levels are not yet converted, and (II) the relation between the incident light quantity and the brightness level in a curve G52 obtained by converting the brightness levels of the curve G51 by using the curve G41 shown in FIG. 4.

As shown in FIG. 5, in a range each of whose brightness level on the curve G52 is higher than L/2, the relation between the incident light quantity and the brightness level has the inverse gamma-like characteristic. Meanwhile, in a range each of whose brightness level on the curve G52 is lower than L/2, the relation between the incident light quantity and the brightness level is linear. That is, when the brightness levels in the image pickup signal are converted by the brightness level converting function shown by Equation (2), the relation between the incident light quantity and the brightness level in the image pickup signal is corrected from the relation having the inverse gamma-like characteristic (before conversion) to the relation being linear (after conversion), in the range each of whose brightness level on the curve G52 is lower than L/2. Therefore, when the displaying apparatus such as the CRT or the liquid crystal monitor displays the image represented by the image pickup signal output from the solid-state image pickup device 2, it is easy to apply a gamma correction or an inverse gamma correction. Moreover, in the range each of whose brightness level in the curve G52 is higher than L/2, the relation between the incident light quantity and the brightness level has the inverse gamma-like characteristic. With this, it is possible to suppress the generation of the white area of the subject in the entire range whose brightness levels are high. Further, it is possible to enhance the contrast of the subject in a range each of whose brightness level is close to L/2.

The brightness level converting function that is the quadratic function is simpler than the brightness level converting function that is the sigmoid function. Therefore, in the case of realizing the brightness level converting apparatus 3 by a computer of a microprogramming system, using the brightness level converting function that is the quadratic function requires less calculation amount to convert the brightness levels than using the brightness level converting function that is the sigmoid function. Therefore, the brightness level converting apparatus 3 can convert the brightness levels in the image pickup signal with a shorter period of time and lesser power consumption. Further, in the case in which the brightness level converting apparatus 3 using the brightness level converting function that is the quadratic function is constituted by a hardware realized by a dedicated electronic circuit, the hardware can be constituted by a small-scale hardware as compared with the case in which the brightness level converting apparatus 3 using the brightness level converting function that is the sigmoid function is constituted by a hardware. Therefore, it is possible to realize the brightness level converting apparatus 3 which can drive with lesser power consumption.

(Calculation of Brightness Level Converting Function)

Instead of using the brightness level converting function stored in advance in the storage device, the brightness level converting apparatus 3 may calculate the brightness level converting function each time the image pickup signal is supplied, and then the brightness level converting apparatus 3 may uses the calculated brightness level converting function so as to convert the brightness levels in the image pickup signal. Here, the brightness level converting apparatus 3 calculates the brightness level converting function on the basis of the characteristic of the image represented by the image pickup signal. In the brightness level converting apparatus 3, on the basis of the image pickup signal, the image characteristic extracting section 5 calculates the parameter indicating the characteristic of the image represented by the image pickup signal. Moreover, the converting function calculating section 6 calculates the brightness level converting function on the basis of the parameter calculated on the basis of the image pickup signal. With this, the brightness level converting section 7 converts the brightness levels in the image pickup signal by using the brightness level converting function calculated on the basis of the characteristic of the image. Therefore, the brightness level converting apparatus 3 can perform the brightness level conversion most suitable for the characteristic of the image, and can obtain a more natural image.

Referring to FIGS. 6 to 9, the following will explain details of such calculation of the brightness level converting function. Before explaining the details of the calculation of the brightness level converting function, the following will explain the operation of the solid-state image pickup device 2.

In an imaging surface of the solid-state image pickup device 2, a plurality of photoelectric conversion devices are lined up regularly. Here, each photoelectric conversion device in the imaging surface of the solid-state image pickup device 2 corresponds to each pixel in the image to be picked up. The photoelectric conversion device generates an electric signal corresponding to the brightness level of the incident light quantity. The solid-state image pickup device 2 first generates an analog electric signal which expresses the brightness level of each of the pixels constituting the image to be picked up. Note that according to a photoelectric conversion characteristic of the solid-state image pickup device 2, the relation between the incident light quantity and the brightness level is logarithmic as shown in FIG. 3(a).

(Generation of Image Pickup Signal)

The solid-state image pickup device 2 contains an A/ D conversion circuit (not shown) which samples and quantizes the analog electric signal obtained by the photoelectric conversion device. With this, the solid-state image pickup device 2 generates brightness level data which discretely indicates the brightness level of each of the pixels constituting the image to be picked up. For example, when the solid-state image pickup device 2 includes the A/D conversion circuit having a resolution of 8 bits, the solid-state image pickup device 2 generates the brightness level data whose value is any one of 0 to 255.

On the basis of the analog electric signal obtained by each photoelectric conversion device, (I) the solid-state image pickup device 2 generates (i) pixel address data indicating a pixel address, in the image, of each of the pixels constituting the image to be picked up or (ii) a synchronization signal necessary for calculating a predetermined pixel address, or (II) the solid-state image pickup device 2 externally receives a synchronization signal that is for sequentially generating the brightness level data corresponding to the predetermined pixel address. Here, the solid-state image pickup device 2 generates, for each pixel, pixel characteristic data in which the pixel address and the brightness level data are associated with each other.

The solid-state image pickup device 2 repeats such data generation on the basis of the analog signals obtained from all the photoelectric conversion devices. Thus, the solid-state image pickup device 2 associates with each other the pixel characteristic data regarding all the pixels constituting the image to be picked up, so as to finally generate the image pickup signal. Moreover, the solid-state image pickup device 2 outputs the generated image pickup signal to a pixel block brightness level calculating section 30 constituting the image characteristic extracting section 5, and to the brightness level converting section 7.

Note that the solid-state image pickup device 2 in the brightness level converting apparatus 3 may not contain the A/D conversion circuit. In such a case, the A/D conversion circuit is provided outside the solid-state image pickup device 2 in the brightness level converting apparatus 3. That is, the solid-state image pickup device 2 uses an external A/D conversion circuit to sample and quantizes the analog electric signal indicating the brightness level. Thus, it is possible to obtain the same image pickup signal as the image pickup signal generated by the solid-state image pickup device 2 which contains the A/D conversion circuit.

(Details of Image Characteristic Extracting Section 5)

FIG. 6 is a block diagram showing detailed internal arrangement of the image characteristic extracting section 5 included in the brightness level converting apparatus 3 of the present invention. As shown in FIG. 6, the image characteristic extracting section 5 includes the pixel block brightness level calculating section 30, a histogram calculating section 31 (histogram calculating means), a histogram moving average processing section 32 (histogram smoothing means), a bright region pixel block searching section 33 (fourth cumulative number-of-pixels calculating means), a bright region address dispersion calculating section 34 (bright region pixel address dispersion calculating means), a high brightness reference level calculating section 35 (second cumulative number-of-pixels calculating means, first high brightness reference level calculating means, bright region pixel address dispersion judging means, second standard number-of-pixels setting means), a dark region pixel block searching section 36 (third cumulative number-of-pixels calculating means), a dark region address dispersion calculating section 37 (dark region pixel address dispersion calculating means), a low brightness reference level calculating section 38 (first cumulative number-of-pixels calculating means, first low brightness reference level calculating means, dark region pixel address dispersion judging means, first standard number-of-pixels setting means), and a scaling operating section 39 (second low brightness reference level calculating means, second high brightness reference level calculating means).

(Calculation of Brightness Level Representative Value of Pixel Block)

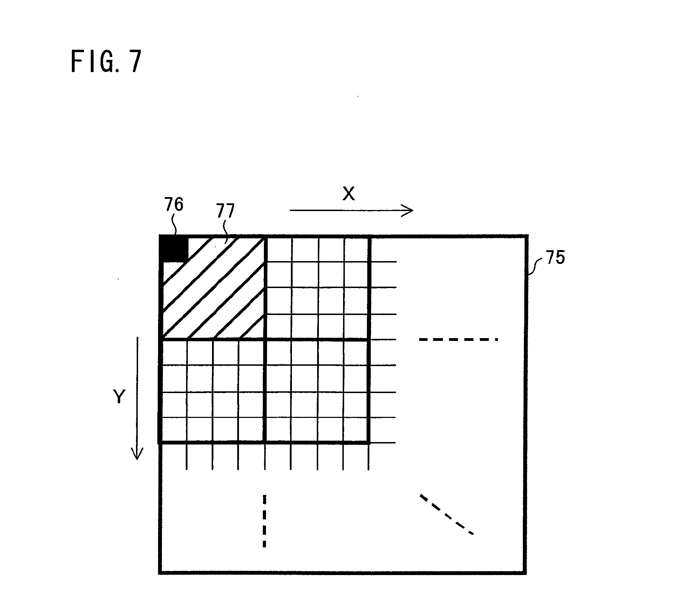

The pixel block brightness level calculating section 30 calculates a brightness level representative value of the pixel block constituting the picked-up image. Referring to FIG. 7, the following will explain this operation.

FIG. 7 is a diagram for explaining a principle of the operation of the pixel block brightness level calculating section 30. The pixel block brightness level calculating section 30 extracts as a pixel block 77 a plurality of pixels 76 which are close to each other in an imaging surface 75 of the solid-state image pickup device 2. For example, the pixel block brightness level calculating section 30 repeatedly divides the picked-up image into lattice shapes in an X direction and a Y direction shown by arrows in FIG. 7.

The pixel block brightness level calculating section 30 calculates one brightness level representative value per extracted pixel block 77. Here, the pixel block brightness level calculating section 30 calculates as the brightness level representative value of a certain pixel block 77, an average value of the brightness levels of all the pixels constituting the certain pixel block 77. The pixel block brightness level calculating section 30 stores the calculated brightness level representative value in the image signal as the brightness level of the pixel block, and outputs to the histogram calculating section 31. In the following description, the term "pixel" is used as the pixel block, and the term "brightness level" is used as the brightness level representative value of the pixel block.

(Calculation of Histogram)

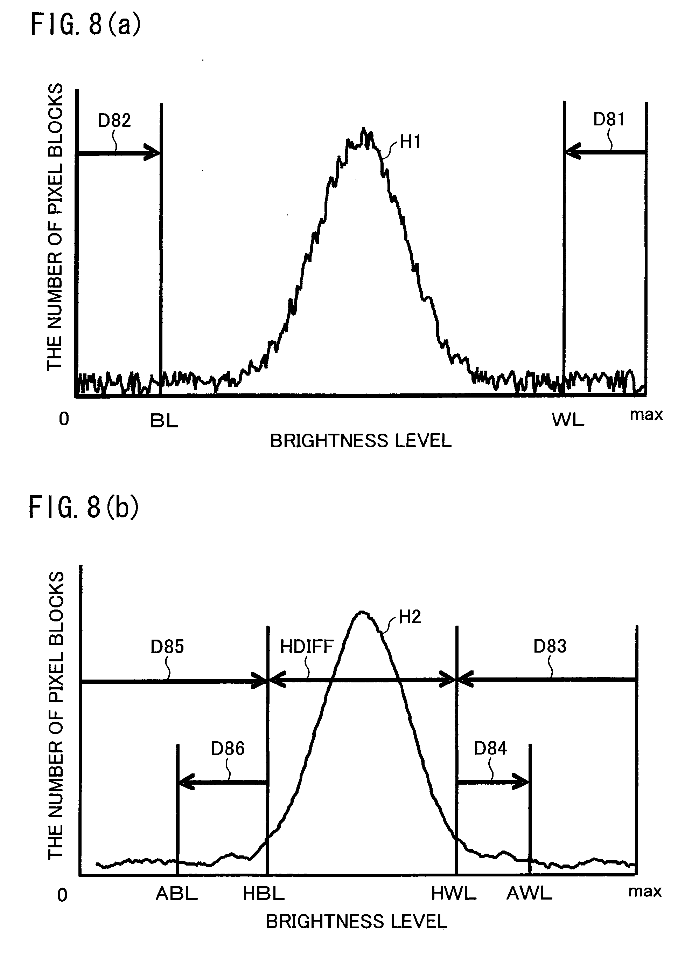

The histogram calculating section 31 calculates on the basis of the image pickup signal a histogram H1 (shown in FIG. 8(a)) which indicates the relation between the brightness level and the number of pixels. Specifically, the histogram calculating section 31 calculates the histogram H1 by counting the brightness levels in the image pickup signal during one frame. Specifically, the histogram calculating section 31 generates histogram data in which each brightness level and the number of pixels having this brightness level are associated with each other. The histogram calculating section 31 outputs the generated histogram data to the histogram moving average processing section 32.

As will be described later, in the brightness level converting apparatus 3, the converting function calculating section 6 calculates the brightness level converting function on the basis of the histogram H1. Thus, the converting function calculating section 6 can calculate the most appropriate brightness level converting function that conforms to the image of the subject. Moreover, the brightness level converting section 7 can convert the brightness levels in the image pickup signal by using the brightness level converting function that is most appropriate for the image of the subject. Thus, it is possible to apply with success the brightness level converting apparatus 3 especially to an image pickup apparatus, such as a video camera for shooting a video.

(Averaging of Histogram)

The histogram moving average processing section 32 smoothes the histogram H1 so as to calculate a smoothed histogram H2 that is smooth and has less irregularities. Specifically, on the basis of the histogram data inputted, the histogram moving average processing section 32 calculates a moving average value, in a direction of the brightness level, of the number of pixels in the histogram H1, so as to calculate the smoothed histogram H2 shown in FIG. 8(b). Further, the histogram moving average processing section 32 outputs data indicating the smoothed histogram H2 to the low brightness reference level calculating section 38 and the high brightness reference level calculating section 35.

Thus, the histogram moving average processing section 32 can reduce shaking of the histogram H1. Note that the shaking of the histogram H1 is caused due to a strong fluctuation of the subject. Moreover, the converting function calculating section 6 calculates the brightness level converting function on the basis of the smoothed histogram H2. Therefore, the brightness level converting section 7 converts the brightness levels in the image pickup signal by using the brightness level converting function having less parameter fluctuation. Note that the brightness level converting function having less parameter fluctuation is calculated on the basis of the smoothed histogram H2 having less shaking. Thus, in the case of supplying to the image displaying apparatus the image pickup signal whose brightness levels are converted, the image displaying apparatus can display the image whose flicker is further suppressed.

(Searching of Bright Region Pixel Block)

Referring to FIG. 8(a), the following will explain the operations of the bright region pixel block searching section 33 and the dark region pixel block searching section 36.

The bright region pixel block searching section 33 calculates a predetermined fourth cumulative number of pixels by cumulatively adding the pixels in a direction from the highest brightness level to a lower brightness level in the histogram H1, that is, in a direction D81 in FIG. 8(a). That is, the bright region pixel block searching section 33 calculates the fourth cumulative number of pixels by cumulatively counting the number of pixels each of whose brightness level is within a range from a fourth standard brightness level to the highest brightness level in the histogram H1. Here, in the case in which the fourth cumulative number of pixels calculated exceeds a predetermined fourth standard number of pixels, the bright region pixel block searching section 33 calculates the fourth standard brightness level as a bright region searching reference brightness level WL (bright region standard brightness level). Note that the predetermined fourth standard number of pixels is a value determined experimentally, and it is preferable that the predetermined fourth standard number of pixels be a value that is 0.5 % to 1.5 % of the total cumulative number of pixels in the histogram H1.

In the brightness level converting apparatus 3, by calculating the bright region searching reference brightness level WL, a target of examination of the dispersion of pixel addresses of pixel blocks can be an image pickup region in an imaging surface of the subject, which region has a limited total size. Therefore, it is possible to define an area, on the imaging surface, of the subject of a brightest part that is an important image pickup target, which area should be examined.

Next, the bright region pixel block searching section 33 extracts from the image pickup signal an X address and a Y address of the pixel block whose brightness level exceeds the bright region searching reference brightness level WL. Thus, the bright region pixel block searching section 33 extracts from the image pickup signal the brightness levels, the X addresses and the Y addresses of the pixel blocks, the number of which corresponds to a predetermined number determined experimentally. The bright region pixel block searching section 33 outputs the extracted brightness levels, X addresses and Y addresses to the bright region address dispersion calculating section 34. The bright region address dispersion calculating section 34 calculates the dispersion of the X addresses and the dispersion of the Y addresses on the basis of the inputted X addresses and Y addresses. The bright region address dispersion calculating section 34 outputs the calculated dispersions to the high brightness reference level calculating section 35.

(Searching of Dark Region Pixel Block)

The dark region pixel block searching section 36 calculates a third cumulative number of pixels by cumulatively adding the pixels in a direction from the lowest brightness level to a higher brightness level in the histogram H1, that is, in a direction D82 in FIG. 8(a). That is, the dark region pixel block searching section 36 calculates the third cumulative number of pixels by cumulatively counting the number of pixels each of whose brightness level is within a range from the lowest brightness level to a third standard brightness level in the histogram H1. Here, in the case in which the third cumulative number of pixels calculated exceeds a predetermined third standard number of pixels, the dark region pixel block searching section 36 calculates the third standard brightness level as a dark region searching reference brightness level BL (dark region standard brightness level). Note that the predetermined third standard number of pixels is a value determined experimentally, and it is preferable that the predetermined third standard number of pixels be a value that is 0.5 % to 1.5 % of the total cumulative number of pixels in the histogram H1.

In the brightness level converting apparatus 3, by calculating the dark region searching reference brightness level BL, a target of examination of the dispersion of pixel addresses of pixel blocks can be an image pickup region of an imaging surface of the subject, which region has a limited total size. Therefore, it is possible to define an area, on the imaging surface, of the subject of a darkest part that is the important image pickup target, which area should be examined.

(Extraction of Each Address)

Next, the dark region pixel block searching section 36 extracts from the image pickup signal an X address and a Y address of the pixel block whose brightness level is lower than the dark region searching reference brightness level BL. Thus, the dark region pixel block searching section 36 extracts from the image pickup signal the brightness levels, the X addresses and the Y addresses of the pixel blocks, the number of which corresponds to a predetermined number determined experimentally. The dark region pixel block searching section 36 outputs the extracted brightness levels, X addresses and Y addresses to the dark region address dispersion calculating section 37. The dark region address dispersion calculating section 37 calculates the dispersion of the X addresses (predetermined first standard pixel address dispersion) and the dispersion of the Y addresses (predetermined first standard pixel address dispersion) on the basis of the inputted X addresses and Y addresses. The dark region address dispersion calculating section 37 outputs the calculated dispersions to the low brightness reference level calculating section 38.

Referring to FIG. 8(b), the following will explain the operations of the low brightness reference level calculating section 38 and the high brightness reference level calculating section 35.

(Calculation of High Brightness Reference Level)

The high brightness reference level calculating section 35 calculates a second cumulative number of pixels by cumulatively adding the pixels in a direction from the highest brightness level to a lower brightness level in the smoothed histogram H2, that is, in a direction D83 in FIG. 8(b). That is, the high brightness reference level calculating section 35 calculates the second cumulative number of pixels by cumulatively counting the number of pixels each of whose brightness level is within a range from a second standard brightness level to the highest brightness level in the smoothed histogram H2. Here, in the case in which the second cumulative number of pixels exceeds a predetermined second standard number of pixels, the high brightness reference level calculating section 35 calculates the second standard brightness level as a high brightness reference level HWL (first high brightness reference level). It is preferable that the predetermined second standard number of pixels be a value that is 0.05 % to 0.5 % of the total cumulative number of pixels in the histogram H1. Note that before this operation, the high brightness reference level calculating section 35 judges whether or not each of the X address and the Y address (bright region pixel address dispersion) calculated by the bright region address dispersion calculating section 34 is larger than a predetermined second standard pixel address dispersion.

When this judgment result is true, the high brightness reference level calculating section 35 judges that brightest part regions of the subject are dispersed on the imaging surface and an aggregate of the brightest part regions of the subject are not the important image pickup target which occupies a unified, certain space. Here, the high brightness reference level calculating section 35 sets the predetermined second standard number of pixels so that the predetermined second standard number of pixels becomes a value that is larger than a predetermined value. Thus, the converting function calculating section 6 obtains the brightness level converting function in which the upper limit in the brightness levels that are subjected to the brightness level conversion is lowered. Therefore, when the brightness level converting section 7 converts the brightness levels by using the brightness level converting function, the brightness level converting section 7 can reduce the allocation of the gradation of the brightest part regions in the image pickup signal and can increase the allocation of the gradation of other region(s). As a result, it is possible to entirely improve the contrast of the image represented by the image pickup signal whose brightness levels are converted. Moreover, at this time, the converting function calculating section 6 calculates the brightness level converting function on the basis of parameters which are statistically more stable. Thus, it is possible to restrain the temporal variation of the brightness level converting function calculated.

It is preferable that the high brightness reference level calculating section 35 use as the predetermined second standard pixel address dispersion, $x^2/20$ to $x^2/200$ and $y^2/20$ to $y^2/200$, where x indicates the total number of pixels in the X direction in the image and y indicates the total number of pixels in the Y direction in the image. The high brightness reference level calculating section 35 outputs the calculated high brightness reference level HWL to the scaling operating section 39.

(Calculation of Low Brightness Reference Level)

The low brightness reference level calculating section 38 calculates a first cumulative number of pixels by cumulatively adding the pixels in a direction from the lowest brightness level to a higher brightness level in the smoothed histogram H2, that is, in a direction D85 in FIG. 8(b). That is, the low brightness reference level calculating section 38 calculates the first cumulative number of pixels by cumulatively counting the number of pixels each of whose brightness level is within a range from the lowest brightness level to a first standard brightness level in the smoothed histogram H2. Here, in the case in which the first cumulative number of pixels exceeds a first standard number of pixels, the low brightness reference level calculating section 38 calculates the first standard brightness level as a low brightness reference level HBL (first low brightness reference level). It is preferable that the predetermined first standard number of pixels be a value that is 0.05 % to 0.5 % of the total cumulative number of pixels in the smoothed histogram H2. Note that before this operation, the low brightness reference level calculating section 38 judges whether or not each of the X address and the Y address (dark region pixel address dispersion) calculated by the dark region address dispersion calculating section 37 is larger than a predetermined first standard pixel address dispersion.

When this judgment result is true, the low brightness reference level calculating section 38 judges that darkest part regions of the subject are dispersed on the imaging surface and an aggregate of the darkest part regions of the subject are not the important image pickup target which occupies a unified, certain space. Here, the low brightness reference level calculating section 38 sets the predetermined first standard number of pixels so that the predetermined first standard number of pixels becomes a value that is larger than a predetermined value. Thus, the converting function calculating section 6 obtains the brightness level converting function in which the lower limit in the brightness levels that are subjected to the brightness level conversion is raised. Therefore, when the brightness level converting section 7 converts the brightness levels by using the brightness level converting function, the brightness level converting section 7 can reduce the allocation of the gradation of the darkest part regions in the image pickup signal and can increase the allocation of the gradation of other region(s). As a result, it is possible to entirely improve the contrast of the image represented by the image pickup signal whose brightness levels are converted. Moreover, at this time, the converting function calculating section 6 calculates the brightness level converting function on the basis of parameters which are statistically more stable. Thus, it is possible to restrain the temporal variation of the brightness level converting function calculated.

It is preferable that the low brightness reference level calculating section 38 use as the predetermined first standard pixel address dispersion, $x^2/20$ to $x^2/200$ and $y^2/20$ to $y^2/200$, where x indicates the total number of pixels in the X direction in the image and y indicates the total number of pixels in the Y direction in the image. The low brightness reference level calculating section 38 outputs the calculated low brightness reference level HBL to the scaling operating section 39.

(Scaling Operation)

First, the scaling operating section 39 calculates as a difference HDIFF (shown in FIG. 8(b)), a difference between the high brightness reference level HWL calculated by the high brightness reference level calculating section 35 and the low brightness reference level HBL calculated by the low brightness reference level calculating section 38. Next, the scaling operating section 39 adds to the high brightness reference level HWL a value obtained by multiplying the difference HDIFF by a predetermined first coefficient CW, so as to calculate a high brightness reference level AWL.

The first coefficient CW is stored in advance in the storage device (not shown). Note that it is preferable that the first coefficient CW have a value in a range from 0.1 to 0.6, and it is more preferable that the first coefficient CW be approximately 0.5. Moreover, the scaling operating section 39 subtracts from the low brightness reference level HBL a value obtained by multiplying the difference HDIFF by a predetermined second coefficient CB, so as to calculate a low brightness reference level ABL. The second coefficient CB is stored in advance in the storage device (not shown). Note that it is preferable that the second coefficient CB have a value in a range from 0.1 to 0.6, and it is more preferable that the second coefficient CB be approximately 0.5.

Thus, the scaling operating section 39 calculates the high brightness reference level AWL by using an equation of AWL = HWL + CW(HWL - HBL). Moreover, the scaling operating section 39 calculates the low brightness reference level ABL by using an equation of ABL = HBL - CB(HWL - HBL). Thus, in accordance with the change in the distribution of the brightness levels in the image pickup signal, it is possible to obtain the upper limit and the lower limit in the calculated brightness level range. Note that the scaling operating section 39 outputs the calculated high brightness reference level AWL and the calculated low brightness reference level ABL to the converting function calculating section 6.

(Calculation of Brightness Level Converting Function)

The following will explain the operation of the converting function calculating section 6.

On the basis of the high brightness reference level AWL and the low brightness reference level ABL, the converting function calculating section 6 calculates the brightness level converting function expressed by an S-shaped curve which indicates the relation between the input brightness level and the output brightness level and includes one inflexion point. Specifically, the converting function calculating section 6 calculates the brightness level converting function that is the sigmoid function shown by Equation (1). By suitably setting the parameter $\mu$ in Equation (1) so that the parameter $\mu$ has an appropriate value, the converting function calculating section 6 can calculate the sigmoid functions whose curves slope variously, such as the curves G 21 to G23 shown in FIG. 2.

Note that the converting function calculating section 6 uses a parameter $\lambda$ when calculating the sigmoid function shown by Equation (1). Note that f(i) = $\lambda$L when i = AWL. Specifically, the converting function calculating section 6 calculates the brightness level converting function by using $\mu$ which is shown by Equation (3) below and defined by $\lambda$.

$$\mu = \frac{AWL - ABL}{2\log\dfrac{\lambda}{1-\lambda}} \qquad \text{Equation (3)}$$

Moreover, the converting function calculating section 6 calculates the parameter mid in Equation (1) by using Equation (4) below.

$$mid = \frac{ABL + AWL}{2} \qquad \text{Equation (4)}$$

Further, the converting function calculating section 6 calculates the brightness level converting function shown as Equation (1) so that an intermediate point kd between the high brightness reference level AWL and the low brightness reference level ABL becomes the inflexion point.

When f(i) in Equation (1) is normalized by L that is the highest brightness level of the output brightness level, f(i)/L. f(i)/L has a value that is any one of 0 to 1. Thus, the parameter $\lambda$ indicates that what % of the highest brightness level L is the output brightness level when the input brightness level i is equal to the high brightness reference level AWL. That is, the parameter $\lambda$ is a parameter which indicates a gradient of the sigmoid function.

(Control of Gradient of Sigmoid Function)

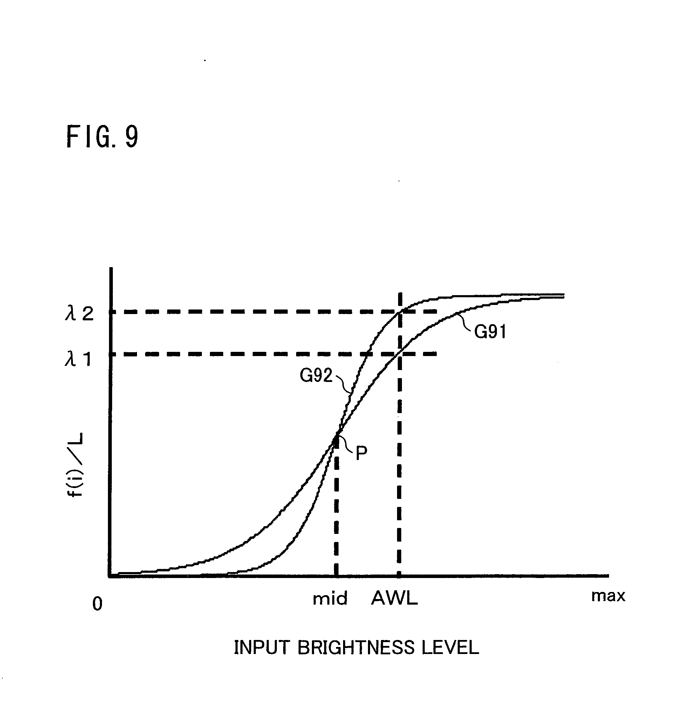

The converting function calculating section 6 can control the gradient of the calculated sigmoid function by suitably setting the parameter $\lambda$ so that the parameter $\lambda$ has an appropriate value. This example is shown in FIG. 9. FIG. 9 is a diagram showing one example of the brightness level converting function calculated by the converting function calculating section 6. In FIG. 9, $\lambda$2 > $\lambda$1. FIG. 9 shows a curve 91 that is a brightness level converting curve obtained when λ = λ1. In addition, FIG. 9 also shows a curve G92 that is a brightness level converting curve obtained when λ = λ2. Here, as shown in FIG. 9, the gradient of the curve G92 is steeper than the gradient of the curve G91. That is, the larger λ is, the steeper the gradient of the brightness level converting curve calculated by the converting function calculating section 6 becomes.

The converting function calculating section 6 calculates $\mu$ of Equation (3) on the basis of the above-described method. Then, the converting function calculating section 6 calculates the sigmoid function shown as Equation (1). Moreover, the converting function calculating section 6 creates a brightness level conversion table on the basis of the brightness level converting function calculated. That is, the converting function calculating section 6 determines the value of the output brightness level corresponding to each input brightness level, so as to create the brightness level conversion table in which the input brightness level and the output brightness level are associated with each other. The converting function calculating section 6 outputs the created brightness level conversion table to the brightness level converting section 7.

(Details of Brightness Level Conversion)

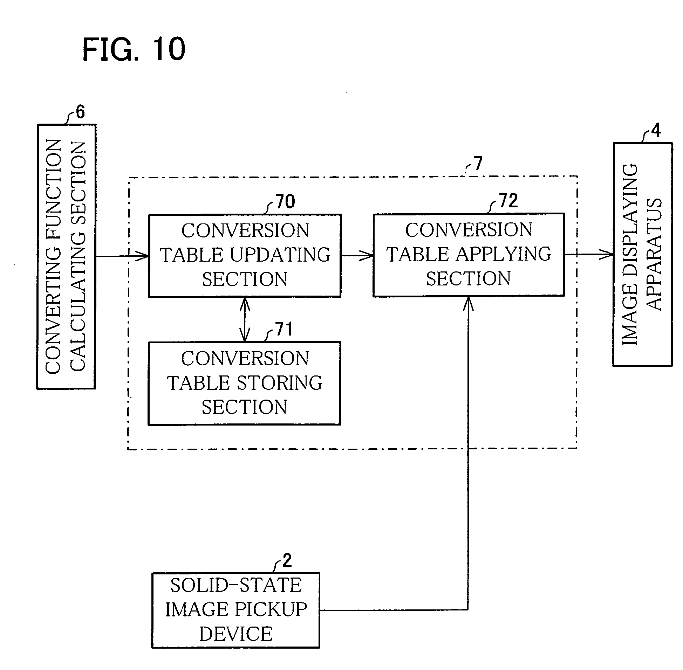

Referring to FIG. 10, the following will explain the brightness level converting section 7. FIG. 10 is a block diagram showing an arrangement of the brightness level converting section 7. As shown in FIG. 10, the brightness level converting section 7 includes a conversion table updating section 70, a conversion table storing section 71 and a conversion table applying section 72. The conversion table storing section 71 stores the brightness level conversion table that is applied previous time by the conversion table applying section when converting the brightness levels. The conversion table updating section 70 calculates the brightness level conversion table of this time on the basis of the brightness level conversion table of previous time stored in the conversion table storing section 71 and the brightness level conversion table calculated by the converting function calculating section 6. The conversion table updating section 70 updates the brightness level conversion table of previous time to the brightness level conversion table of this time.

By using the updated brightness level conversion table of this time stored in the conversion table storing section 71, the conversion table applying section 72 converts per pixel the brightness levels in the image pickup signal output from the solid-state image pickup signal 2. Moreover, conversion table applying section 72 outputs to the image displaying apparatus the image pickup signal whose brightness levels are converted. On the basis of the image pickup signal inputted, the image displaying apparatus displays the image represented by the image pickup signal.

Note that if the conversion table applying section 72 every time applies the conversion table calculated by the converting function calculating section 6, there may be a possibility that the flicker of the screen is generated. Here, it is preferable that the conversion table updating section 70 calculate the brightness level conversion table of this time by using an IIR (Infinite Impulse Response) filter. Thus, the conversion table updating section 70 can update the brightness level conversion table by changing an IIR filter coefficient so that the IIR filer has an arbitrary time constant. Therefore, it is possible to suppress the generation of the flicker of the screen.

Note that the converting function calculating section 6 may calculate the brightness level converting function that is the quadratic function. In this case, the converting function calculating section 6 uses as a lower limit x1 of the input brightness level, the low brightness reference level ABL output by the image characteristic extracting section 5. Moreover, as a lower limit x2 of the output brightness level, the converting function calculating section 6 uses the high brightness reference level AWL output by the image characteristic extracting section 5.

[EMBODIMENT 2]

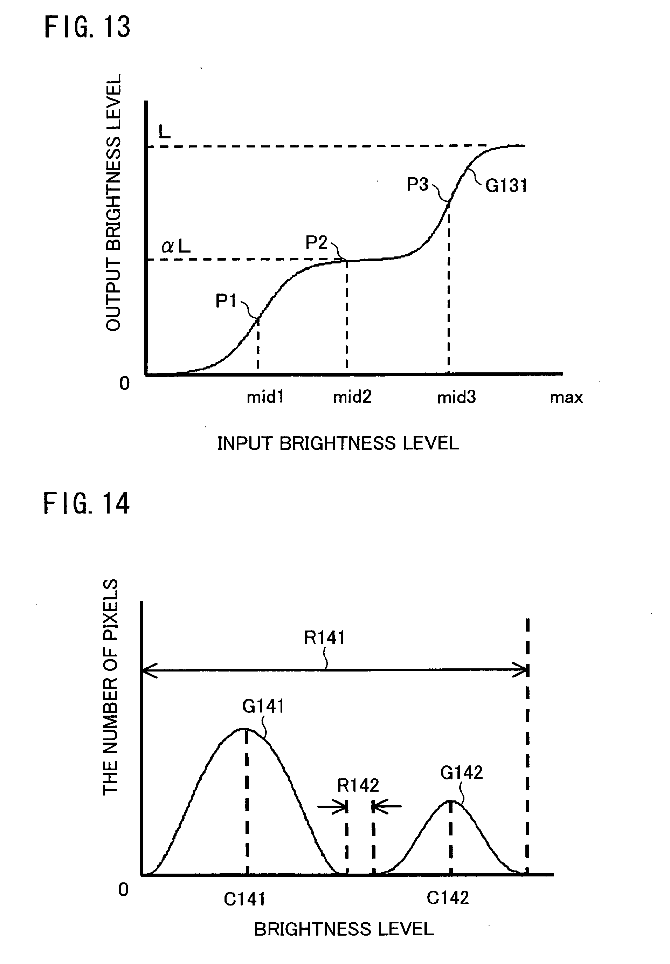

Referring to FIGS. 13 to 20, the following will explain Embodiment 2 of the present invention.

A solid-state image pickup apparatus 1 of the present embodiment is schematically shown in FIG. 1, which is a block diagram of the solid-state image pickup apparatus 1. Because the solid-state image pickup apparatus 1 in the present embodiment is similar to that in Embodiment 1, the detailed explanation of the configuration of the solid-state image pickup apparatus 1 is omitted here. In the present embodiment, the brightness level converting apparatus 3 is different from that in Embodiment 1 in terms of its configuration and operation. The following will explain in detail the configuration and operation of the brightness level converting apparatus 3.

The brightness level converting apparatus 3 converts the brightness levels in the image pickup signal output thereto from a solid-state image pickup device 2. As shown in FIG. 1, the brightness level converting apparatus 3 includes the image characteristic extracting section 5, the converting function calculating section 6 (function calculating means), and the brightness level converting section 7 (brightness level converting means).

The image characteristic extracting section 5 extracts a characteristic of an image picked up by the solid-state image pickup device 2. Specifically, on the basis of the image pickup signal output from the solid-state image pickup device 2, the image characteristic extracting section 5 generates various parameters indicating the characteristic of the pixel. The converting function calculating section 6 calculates the brightness level converting function used for converting the brightness levels in the brightness level converting apparatus 3. Details of these will be described later.

(Characteristic of Brightness Level Converting Function)

The brightness level converting section 7 converts the brightness levels in the image pickup signal by using the brightness level converting function expressed by a curve which indicates the relation between the input brightness level and the output brightness level and includes one inflexion point indicating the input brightness level that is lower than a predetermined standard brightness level, and one inflexion point indicating the input brightness level that is higher than the standard brightness level. The brightness level converting function is expressed by a curve which indicates the relation between the input brightness level and the output brightness level, and the curve is bulged downward on the left side of the inflexion point located leftmost. The brightness level converting function is stored in advance in the storage device (not shown). The brightness level converting section 7 refers to the brightness level converting function according to need.

The brightness level converting function used by the brightness level converting section 7 in the present embodiment is a weighting addition function of a dark region S-shaped function and a bright region S-shaped function. The dark region S-shaped function is expressed by an S-shaped curve which indicates the relation between the input brightness level and the output brightness level and includes one inflexion point in a dark region. The dark region is a region to which the brightness levels each of which is lower than the standard brightness level belong. That is, the dark region S-shaped function is a function used for converting the brightness levels each of which is lower than the standard brightness level in the image pickup signal.

On the other hand, the bright region S-shaped function is expressed by an S-shaped curve which indicates the relation between the input brightness level and the output brightness level and includes one inflexion point in a bright region. The bright region is a region to which the brightness levels each of which is higher than the standard brightness level belong. That is, the bright region S-shaped function is a function used for converting the brightness levels each of which is higher than the standard brightness level in the image pickup signal.

Moreover, as will described later, the converting function calculating section 6 calculates the brightness level converting function having the above characteristics.

Here, the expression "S-shaped curve" is a curve whose slope becomes steeper toward the inflexion point. In other words, the output brightness level shows a greater change (increment) in correspondence with a change (increment) in the input brightness level at a point closer to the inflexion point in the brightness level converting function used by the brightness level converting section 7.

(Details of Brightness Level Conversion)

There is a case where the image picked up by the solid-state image pickup device includes a dark subject and a bright subject at the same time as shown in FIG. 27, and the difference in the light quantity between the dark subject and bright subject is very large. In this case, on the basis of the characteristic of the picked-up image, (I) the brightness level converting section 7 converts the brightness levels in the image pickup signal so that the inflexion point of the dark region S-shaped function comes to the vicinity of a median of a brightness level distribution of an image of the dark subject, and (II) the brightness level converting section 7 converts the brightness levels in the image pickup signal so that the inflexion point of the bright region S-shaped function comes to the vicinity of a median of a brightness level distribution of an image of the bright subject.

As described above, the slope of the curve of the brightness level converting function is steep near the inflexion point. That is, the brightness level converting section 7 performs such a brightness level conversion as to intensify the contrast in the vicinities of the medians of both the distributions of the dark subject and the bright subject. In this case, by using the brightness level converting function expressed by the S-shaped curve, the brightness level conversion is carried out with respect to the images of the dark subject and bright subject. This reduces the contrast in relatively low brightness level ranges in both the images of the dark subject and bright subject. Meanwhile, this reduces the contrast in relatively high brightness level ranges while keeping the gradation to be appropriate.

With this, the brightness level converting section 7 significantly improves the contrast in relatively intermediate brightness level ranges in both of the dark subject and the bright subject. As a result, an image represented by the image pickup signal subjected to this brightness level conversion shows the subjects more naturally with clearer contrast, compared with the method in which a partial brightness level region of the image pickup signal including distributions of the dark subject and bright subject is cut out, and the gradation is linearly extended.

(Details of Brightness Level Converting Function)

Referring to FIGS. 13, 14, and 27, the following will explain the details of the brightness level converting function used by the brightness level converting section 7 when converting the brightness levels. FIG. 13 is a diagram showing one example of the brightness level converting function used by the brightness level converting section 7 when converting the brightness levels in the image pickup signal. A curve G131 shown in FIG. 13 is expressed by Equation (5) below.

$$f(i) = \alpha\, g(i) + (1-\alpha)\, h(i) = \alpha\, \frac{L}{1+e^{-\frac{i-mid1}{\mu g}}} + (1-\alpha)\, \frac{L}{1+e^{-\frac{i-mid3}{\mu h}}} \qquad \text{Equation (5)}$$

In Equation (5), i indicates the input brightness level, f(i) indicates the output brightness level, L indicates the highest brightness level of the output brightness level, e indicates a base of the natural logarithm, and $\alpha$ indicates a coefficient that takes any value in a range of from 0 to 1. By $\alpha$, the output brightness level is partitioned into regions. Therefore, $\alpha$ is referred to as "output brightness level region partition coefficient" hereinafter.

The curve G 131 shown in FIG. 13 has three inflexion points. That is, the curve G131 has a first inflexion point P1, a second inflexion point P2 and a third inflexion point P3 in the order of the lowest brightness level to the highest brightness level. Among them, the second inflexion point P2 does not play a significant role in the contrast adjustment of the image. The first inflexion point P1 relates to the contrast adjustment in that part of the picked-up image which has the brightness level lower than the standard brightness level. The third inflexion point P3 relates to the contrast adjustment in that part of the picked-up image which has the brightness level higher than the standard brightness level. Moreover, the curve G 131 is bulged downward on the left side of the first inflexion point P1 whose brightness level is the lowest among the inflexion points P1, P2, and P3. That is, the curve G131 is bulged downward in the dark region in which the brightness level is lower than that in the other region.

(Sigmoid Function)

As shown by Equation (5), f(i) is expressed as addition of a product of a sigmoid function g(i) and the coefficient $\alpha$, and a product of a sigmoid function h(i) and a coefficient (1-$\alpha$). That is, f(i) is a weighting addition function of the sigmoid function g(i), which is the first term, and the sigmoid function h(i), which is the second term.

Here, $\mu g$ is a parameter that defines a gradient at the first inflexion point P1 on the curve G131, while $\mu h$ is a parameter that defines a gradient at the third inflexion point P3 on the curve G 131.

The sigmoid function g(i) serves as the dark region S-shaped function and thus is used in the brightness level conversion for the dark region, while the sigmoid function h(i) serves as the bright region S-shaped function and thus is used in the brightness level conversion for the bright region.

(One Example of Brightness Level Conversion)

FIG. 27 is a histogram showing the relation, between the brightness level and the number of pixels in the image pickup signal, in the image obtained by imaging a dark subject and a bright subject together by the logarithmic conversion solid-state image pickup device 2. Note that the difference in the light quantity is large between the dark subject and the bright subject. Two subjects between which the difference in the light quantity is large are, for example, a sight inside a tunnel and a sight outside the tunnel and under the sunlight. Another example is a sight inside a room with windows and a sight outside the windows and under the sunlight. Here, the solid-state image pickup device 2 picks up these subjects together in the same imaging surface. By way of example, the following will explain the case in which the solid-state image pickup device 2 takes an image of the sight in the vicinity of the end of the tunnel.

In FIG. 27, the curve G271 shows a brightness level distribution of the image pickup signal that represents the image of the sight inside the tunnel, while the curve G272 shows a brightness level distribution of the image pickup signal that represents the image of the sight outside the tunnel. Moreover, a brightness level C271 is a median brightness level in the brightness level distribution of the curve G271, while a brightness level C272 is a median brightness level in the brightness level distribution of the curve G272.

By using the curve G131 having the first inflexion point P1 at the brightness level C271 and the third inflexion point P3 at the brightness level C272, the brightness level converting section 7 converts the brightness level of the image pickup signal having the brightness level-number of pixels characteristic shown in FIG. 27. The brightness level conversion causes the image pickup signal to have the brightness level-number of pixels characteristic represented by a histogram shown in FIG. 14. FIG. 14 is one example of the histogram showing the relation between the brightness level and the number of pixels in the image pickup signal whose brightness levels are converted.

By using the brightness level converting function of the curve G131, the brightness level converting section 7 converts the curve G271 that corresponds to the image of the dark subject into the curve G141 shown in FIG. 14, while the brightness level converting section 7 converts the curve G272 that corresponds to the image of the bright subject into the curve G142 shown in FIG. 14.

As a result, the brightness distribution of the curve G141 that corresponds to the image of the dark subject is wider centering at the brightness level C141, compared with the curve 271 that is not subjected to the brightness level conversion. Moreover, the brightness distribution of the curve G142 that corresponds to the image of the bright subject is wider centering at the brightness level C142, compared with the curve 272 that is not subjected to the brightness level conversion.

Therefore, as a result of the brightness level conversion, the brightness level range R272 in which the number of pixels are little is converted to the brightness level range R142 (shown in FIG. 14) which is narrower than the brightness level range R272. Therefore, a ratio of the brightness level range R142 over the entire brightness level range R 141 is lower than a ratio of the brightness level range R272 over the entire brightness level range R271. Accordingly, wider ranges of brightness levels are utilized for expressing the image of the dark subject and the bright subject.

With this, the image of the sight inside tunnel, which corresponds to the curve G 141, is reproduced with a greater contrast when the image pickup signal (brightness level signal) subjected to the brightness level conversion is reproduced, compared with the case of converting the brightness level in the image pickup signal by using the conventional method described in Japanese Unexamined Patent Application No. 28714/2001 (Tokukai 2001-28714, published on January 30, 2001). The same is true for the contrast of the sight outside the tunnel, which corresponds to the distribution of G272.

(Conclusion)

For the dark subject, the above-described brightness level conversion reduces the contrast in the range in which each of the brightness levels is lower than the brightness level at the dark inflexion point. At the same time, while keeping the gradation to be appropriate, the above-described brightness level conversion reduces the contrast in the range in which each of the brightness levels is higher than the brightness level at the dark inflexion point. For the bright subject, the above-described brightness level conversion reduces the contrast in the range in which each of the brightness levels is lower than the brightness level at the bright inflexion point. At the same time, while keeping the gradation to be appropriate, the above-described brightness level conversion reduces the contrast in the range in which each of the brightness levels is higher than the brightness level at the bright inflexion point.

With this, the brightness level converting section 7 significantly improves the contrast in the relatively intermediate brightness level of both the dark and bright subjects. As a result, the image represented by the image pickup signal subjected to this brightness level conversion shows the subjects more naturally with clearer contrast, compared with the method in which brightness level regions corresponding to respective subjects are extracted from the image pickup signal including the distributions of the dark subject and bright subject and the gradation are linearly extended.

(Calculation of Brightness Level Converting Function)

Instead of using the brightness level converting function stored in advance in the storage device, the brightness level converting apparatus 3 may calculate the brightness level converting function each time the image pickup signal is supplied, and then the brightness level converting apparatus 3 may uses the calculated brightness level converting function so as to convert the brightness levels in the image pickup signal. Here, the brightness level converting apparatus 3 calculates the brightness level converting function on the basis of the characteristic of the image represented by the image pickup signal.

In the brightness level converting apparatus 3, on the basis of the image pickup signal, the image characteristic extracting section 5 calculates a parameter that indicates the characteristic of the image represented by the image pickup signal. Moreover, the converting function calculating section 6 calculate the brightness level converting function on the basis of the parameter calculated on the basis of the image pickup signal. With this, the brightness level converting section 7 converts the brightness levels in the image pickup signal by using the brightness level converting function calculated on the basis of the characteristic of the image. This allows the brightness level converting apparatus 3 to perform brightness level conversion most suitable for the characteristic of the image, thereby attaining more natural reproduction of the image.

Referring to FIG. 13, the following will explain details of the calculation of the brightness level converting function. Here, the operation of the solid-state image pickup device 2 is not explained again, because it is similar to that of Embodiment 1.

(Details of Image Characteristic Extracting Section 5)

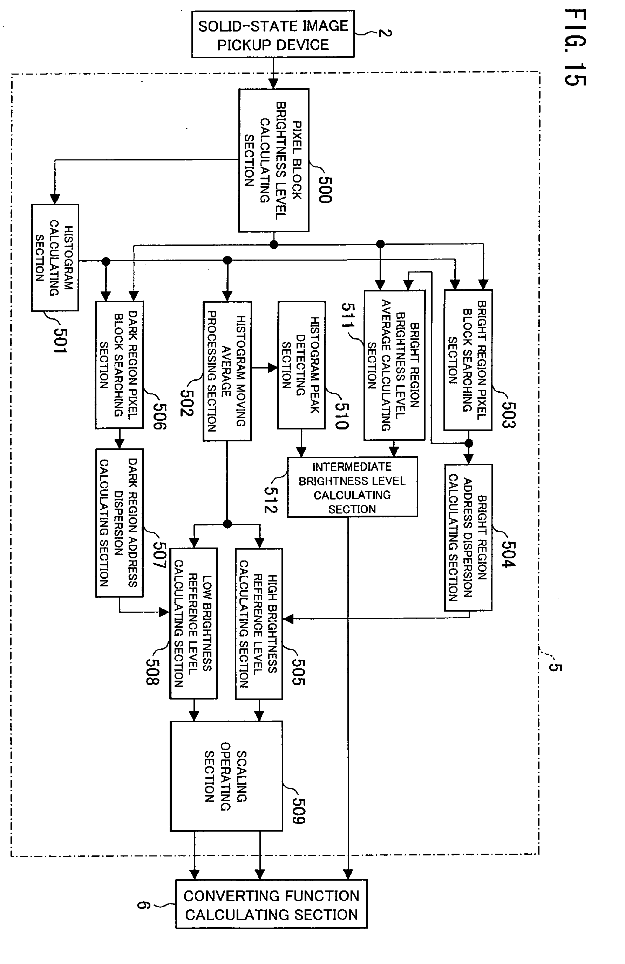

FIG. 15 is a block diagram showing detailed internal arrangement of the image characteristic extracting section 5 included in the brightness level converting apparatus 3 of the present embodiment. As shown in FIG. 15, the image characteristic extracting section 5 includes a pixel block brightness level calculating section 500, a histogram calculating section 501 (histogram calculating means), a histogram moving average processing section 502 (histogram smoothing means), bright region pixel block searching section 503 (fourth cumulative number-of-pixels calculating means), a bright region address dispersion calculating section 504 (bright region pixel address dispersion calculating means), a high brightness reference level calculating section 505 (second cumulative number-of-pixels calculating means, first high brightness reference level calculating means, bright region pixel address dispersion judging means, second standard number-of-pixels setting means), a dark region pixel block searching section 506 (third cumulative number-of-pixels calculating means), a dark region address dispersion calculating section 507 (dark region pixel address dispersion calculating means), a low brightness reference level calculating section 508 (first cumulative number-of-pixels calculating means, first low brightness reference level calculating means, dark region pixel address dispersion judging means, first standard number-of-pixels setting means), a scaling operating section 509 (second low brightness reference level calculating means, second high brightness reference level calculating means), a histogram peak detecting section 510 (dark region peak brightness level calculating means), a bright region brightness level average calculating section 511 (bright region pixel average brightness level calculating means), and an intermediate brightness level calculating section 512 (intermediate brightness level calculating means).

Of these sections, the pixel block brightness level calculating section 500, the histogram calculating section 501, the histogram moving average processing section 502, the bright region pixel block searching section 503, the bright region address dispersion calculating section 504, the high brightness reference level calculating section 505, the dark region pixel block searching section 506, the dark region address dispersion calculating section 507, the low brightness reference level calculating section 508, and the scaling operating section 509 operate in the similar manner as the corresponding sections in Embodiment 1, that is, the pixel block brightness level calculating section 30, the histogram calculating section 31, the histogram moving average processing section 32, the bright region pixel block searching section 33, the bright region address dispersion calculating section 34, the high brightness reference level calculating section 35, the dark region pixel block searching section 36, the dark region address dispersion calculating section 37, the low brightness reference level calculating section 38, and the scaling operating section 39. Therefore, their explanations are omitted here.

(Detection of Histogram Peak)

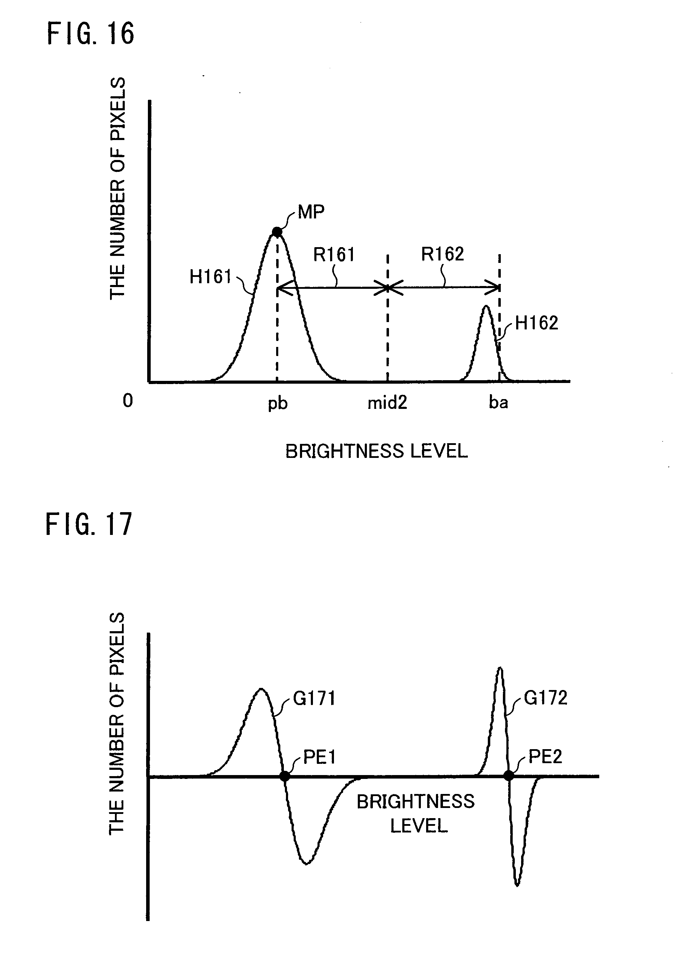

The histogram peak detecting section 510 detects the brightness level at which the number of pixels is the largest (peak) in a histogram curve which expresses a smoothed histogram calculated by the histogram moving average processing section 502. Referring to FIGS. 16 and 17, the following will explain the operation of the histogram peak detecting section 510.

FIG. 16 is a histogram showing the relation between the brightness level and the number of pixels in the image pickup signal that represents the image including both the dark subject and the bright subject between which the difference in the light quantity is large. The histogram shown in FIG. 16 has been subjected to smoothing performed by the histogram moving average processing section 502. For the smoothed histogram curve H161 and H162 shown in FIG. 16, the histogram peak detecting section 510 calculates a difference number of pixels per brightness level. The difference number of pixels is a difference between the number of pixels indicated by a brightness level in question and the number of pixels indicated by an adjacent brightness level adjacent to the brightness level in question. With this, a curve showing the relation between the calculated difference number of pixels and the brightness level is calculated.

(Calculation of Zero-Cross Brightness Level Point)

FIG. 17 is a diagram showing the curves G171 and G172 each of which indicates the relation between the difference number of pixels calculated by the histogram peak detecting section 510 and the brightness level. The histogram peak detecting section 510 calculates the curve G171 from the smoothed histogram curve H161 and the curve G172 from the smoothed histogram curve H162. Here, as shown in FIG. 17, the histogram peak detecting section 510 calculates a zero-cross brightness level point PE1 included in the curve G171. PE1 is a point of the curve G 171 at which the number of pixels crosses the axis of the brightness level, turning from positive to negative. Similarly, the histogram peak detecting section 510 calculates a zero-cross brightness level point PE2 included in the curve G 172. PE2 is a point of the curve G172 at which the number of pixels crosses the axis of the brightness level, turning from positive to negative.

In the example shown in FIG. 17, the histogram peak detecting section 510 calculates two zero-cross brightness level points (PE1 and PE2). The reason why the histogram peak detecting section 510 calculates two zero-cross brightness level points is because this histogram has such a shape. Depending on optical states of a subject picked up by the solid-state pickup device 1, the histogram peak detecting section 510 may calculate more than two zero-cross brightness level points. That is, the histogram peak detecting section 510 can calculate any number of the zero-cross brightness level points according the shape of the histogram.

(Detection of Maximum Peak Brightness Level)

Next, the histogram peak detecting section 510 detects the number of pixels at the zero-cross brightness level point PE1 and the number of pixels at the zero-cross brightness level point PE2 in the smoothed histogram (i.e., on the curves H161 and H162). Of the zero-cross brightness level points PE1 and PE2, the zero-cross brightness level point having the largest number of pixels is detected as the maximum peak brightness level. With this, the histogram peak detecting section 510 calculates, as the maximum peak brightness level (dark region peak brightness level), the brightness level of a pixel belonging to the largest number of pixels in a range, in the histogram, to which the brightness levels each of which is lower than the predetermined dark region standard brightness level belong.

In the smoothed histogram shown in FIG. 16, the maximum number of pixels is the number of pixel MP that corresponds to the zero-cross brightness level point PE1 on the curve G161. Accordingly, the histogram peak detecting section 510 detects as the maximum peak brightness level a brightness level pb shown in FIG. 16. This pb matches with the brightness level at the PE1. In this way, the histogram peak detecting section 510 calculates the maximum peak brightness level pb (shown in FIG. 16) from the smoothed histogram calculated by the histogram moving average processing section 502.

(Calculation of Bright Region Brightness Level Average)

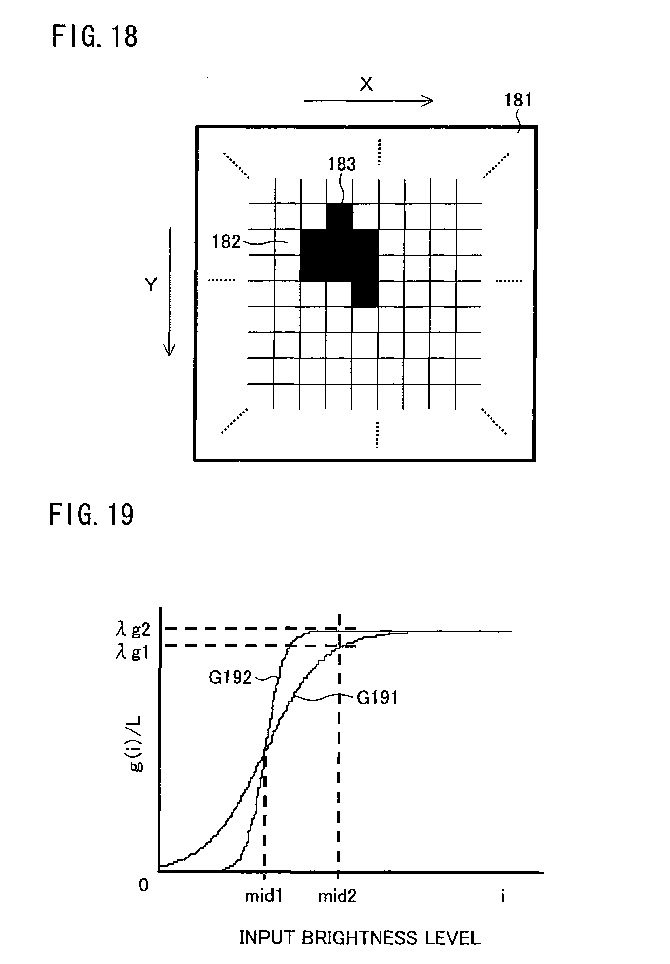

Referring to FIGS. 15 and 18, the following will explain the operation of the bright region brightness level average calculating section 511. The image characteristic extracting section 5 is arranged such that the pixel block brightness level calculating section 500 calculates the brightness level of each of the pixel blocks constituting the picked-up image and outputs the brightness level of each pixel block to the histogram peak detecting section 510. Moreover, a bright region pixel block searching section 503 calculates the bright region searching reference brightness level WL, and outputs the bright region searching reference brightness level WL to the bright region brightness level average calculating section 511. The bright region brightness level average calculating section 511 calculates an average value of the brightness levels of the pixel blocks each of whose brightness level is higher than the bright region searching reference brightness level WL.

Referring to FIG. 18, the following will explain the operation of the bright region brightness level average calculating section 511. FIG. 18 is a diagram for explaining the operation of the bright region brightness level average calculating section 511. In FIG. 18, an imaging surface 181 is an imaging surface of the solid-state image pickup device 2, and a pixel block 182 is a pixel block on the imaging surface 181, and is one of pixel blocks from which the pixel block brightness level calculating section 500 calculates a brightness level representative value. That is, the pixel block 182 corresponds to the pixel block 77 in FIG. 7.

A pixel block 183 is a pixel block on the imaging surface 181, and is one of bright region pixel blocks each of whose brightness level is higher than the brightness region searching reference brightness level WL. The bright region brightness level average calculating section 511 calculates an average value of the brightness levels of the bright region pixel blocks, the number of which is a predetermined number determined experimentally. Then, the bright region brightness level average calculating section 511 outputs the average value to the intermediate brightness level calculating section 512 as a bright region brightness level average value.

(Calculation of Intermediate Brightness Level)

The following will explain the operation of the intermediate brightness level calculating section 512. From the maximum peak brightness level pb and the bright region brightness level average ba, the intermediate brightness level calculating section 512 calculates a center point that is a mid point between pb and ba. That is, the intermediate brightness level calculating section 512 calculates the center point equally distanced from pb and ba, that is, a distance R161 from pb to the center point and a distance R162 from ba to the center point is equal to each other. The intermediate brightness level calculating section 512 outputs, as an intermediate brightness level mid2, a brightness level at the calculated center point, to the converting function calculating section 6 shown in FIG. 13. The intermediate brightness level mid2 indicates the intermediate brightness level in the brightness level converting function expressed as Equation (5).

(Calculation of Converting Function)

The following will explain the operation of the converting function calculating section 6.

On the basis of the high brightness reference level AWL, the low brightness reference level ABL, and the intermediate brightness level mid2, the converting function calculating section 6 calculates the brightness level converting function expressed by a curve which indicates the relation between the input brightness level and the output brightness level and includes three inflexion points. The brightness level converting function calculated plots a curve that is bulged downward on the left side of the inflexion point located leftmost. Specifically, the converting function calculating section 6 calculates the brightness level converting function expressed as Equation (5).

The converting function calculating section 6 calculates the brightness level converting function expressed by a curve which indicates the relation between the input brightness level and the output brightness level and includes one inflexion point indicating the input brightness level that is lower than a predetermined standard brightness level, and one inflexion point indicating the input brightness level that is higher than the predetermined standard brightness level. This brightness level converting function is expressed by a curve which indicates the relation between the input brightness and the output brightness, and the curve is bulged downward on the left side of the inflexion point located leftmost.

The converting function calculating section 6 uses parameters λg and λh in calculating the brightness level converting function expressed as Equation (5). The parameter λg is a parameter that gives g(i) =λgL when i =mid2, where g(i) is the sigmoid function g(i) in Equation (5). Meanwhile, the parameter λh is a parameter that gives h(i) =λhL when i = AWL, where h(i) is the sigmoid function h(i) in Equation (5).

Further, the converting function calculating section 6 calculates λh so that the brightness level converting function of Equation (5) plots a curve on which the input brightness level mid 1 at the first inflexion point is the mid point between the dark brightness reference level ABL and the input brightness level mid2 indicating the intermediate brightness level. Moreover, the converting function calculating section 6 calculates λg so that the brightness level converting function of Equation (5) plots a curve on which the input brightness level mid3 at the third inflexion point is the mid point between the high brightness reference level AWL and the input brightness level mid 2 indicating the intermediate brightness level.

(Parameters $\mu$h and $\mu$g)

Specifically, the converting function calculating section 6 calculates the brightness level converting function having three inflexion points by using $\mu$g defined as Equation (6) that uses λg, and $\mu$h defined as Equation (7) that uses λh.

$$\mu g = \frac{mid2 - ABL}{2\log\dfrac{\lambda g}{1 - \lambda g}} \qquad \text{Equation (6)}$$

$$\mu h = \frac{AWL - mid2}{2\log\dfrac{\lambda h}{1 - \lambda h}} \qquad \text{Equation (7)}$$

Moreover, using Equation (8), the converting function calculating section 6 calculates the input brightness level mid1 at the first inflexion point on the curve plotted by the brightness level converting function expressed as Equation (5). Further, using Equation (9), the converting function calculating section 6 calculates the input brightness level mid3 at the third inflexion point on the curve.

$$mid1 = \frac{ABL + mid2}{2} \qquad \text{Equation (8)}$$

$$mid3 = \frac{mid2 + AWL}{2} \qquad \text{Equation (9)}$$

(Control of Gradient of g(i))

The converting function calculating section 6 controls the gradient of the sigmoid function g(i) by suitably setting the parameter λg so that the parameter λg has an appropriate value. Referring to FIG. 19, the following will explain one example of the control of gradient of g(i). FIG. 19 is a diagram showing one example of the sigmoid function g(i) calculated by the converting function calculating section 6. In this example shown in FIG. 19, λg2 > λg1. A curve G 191 shown in FIG. 19 is a sigmoid function curve obtained when λg = λg1. Meanwhile, a curve G192 shown in FIG. 19 is a sigmoid function curve obtained when λg = λg2 .

As shown in FIG. 19, a gradient of the curve G192 is steeper than that of the curve G 191. That is, the larger the value of λg is, the steeper the gradient of the sigmoid function curve calculated by the converting function calculating section 6 becomes.

(Control of Gradient of h(i))

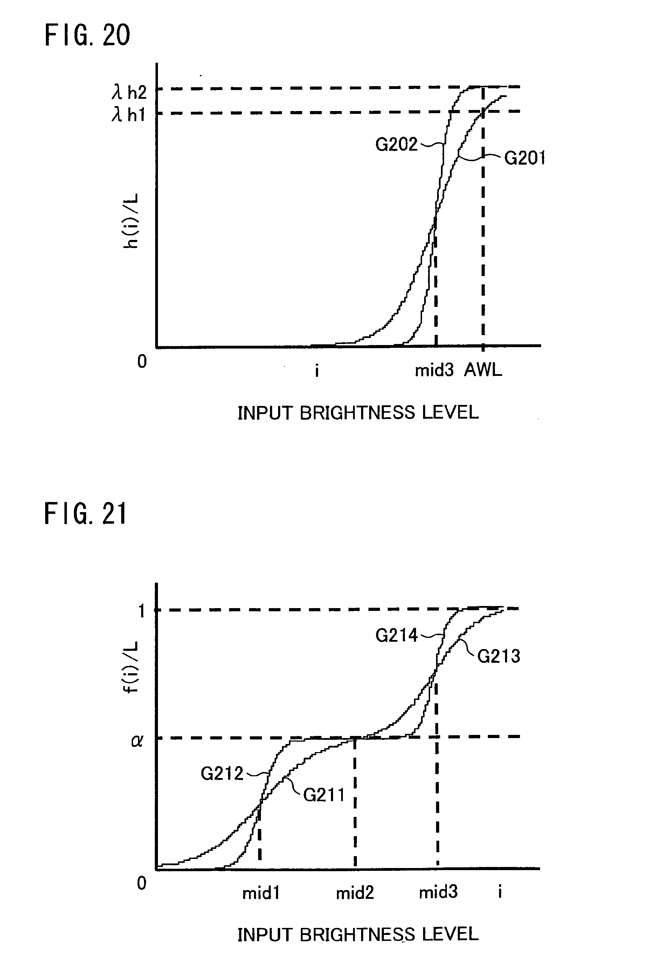

Moreover, the converting function calculating section 6 controls the gradient of the sigmoid function h(i) by suitably setting the parameter λh so that the parameter λh has an appropriate value. Referring to FIG. 20, the following will explain one example of the control of gradient of g(i). FIG. 20 is a diagram showing one example of the sigmoid function h(i) calculated by the converting function calculating section 6. In this example shown in FIG. 20, λh2 > λh1. A curve G201 shown in FIG. 20 is a sigmoid function curve obtained when λh = λh1. Meanwhile, a curve G202 shown in FIG. 20 is a sigmoid function curve obtained when λh = λh2.

As shown in FIG. 20, a gradient of the curve G202 is steeper than that of the curve G201. That is, the larger the value of λh is, the steeper the gradient of the sigmoid function curve calculated by the converting function calculating section 6 becomes.

(One Example of f(i))

FIG. 21 is a diagram showing one example of the brightness level converting function f(i) calculated by the converting function calculating section 6. As described above, the converting function calculating section 6 calculates the brightness level converting function f(i) by weighting the sigmoid functions g(i) and h(i) using the coefficient α. As shown in FIG. 21, the input brightness levels mid1, mid2, and mid3 at the respective inflexion points in the brightness level converting function are such that mid3 > mid2 > mid1. The brightness level converting function f(i) has both the characteristics of the sigmoid functions g(i) and h(i). That is, in a low brightness level region, the conversion of the brightness levels on the curve whose center is mid 1 is carried out on the basis of the characteristic of the sigmoid function g(i), while, in a high brightness level region, the conversion of the brightness levels on the curve whose center is mid3 is carried out on the basis of the characteristic of the sigmoid function h(i).

(Control of Slope of g(i))

As described above, the converting function calculating section 6 controls the gradient of the sigmoid function g(i) by suitably setting the parameter λg so that the parameter λg has an appropriate value. Thus, using the brightness level converting function f(i), the brightness level converting section 7 can appropriately control the contrast in the low brightness level region whose center is mid1. As shown in FIG. 21, when λg = λg1, the brightness level converting function f(i) is expressed by a curve G211 in the low brightness level region, while, when λg = λg2, the brightness level converting function f(i) is expressed by a curve G212 in the low brightness level region.

As shown in FIG. 21, a gradient of the curve G212 is steeper than that of the curve G211. That is, the larger the value of λg is, the steeper the gradient, in the low brightness level region, of the brightness level converting function calculated by the converting function calculating section 6 becomes.

(Control of Slope of h(i))

As described above, the converting function calculating section 6 controls the gradient of the sigmoid function h(i) by suitably setting the parameter λh so that the parameter λh has an appropriate value. Thus, using the brightness level converting function f(i), the brightness level converting section 7 can appropriately control the contrast in the high brightness level region whose center is mid3.

As shown in FIG. 21, when λh = λh1, the brightness level converting function f(i) is expressed by a curve G213 in the high brightness level region, while, when λh = λh2, the brightness level converting function f(i) is expressed by a curve G214 in the high brightness level region.

As shown in FIG. 21, a gradient of the curve G214 is steeper than that of the curve G213. That is, the larger the value of λh is, the steeper the gradient, in the high brightness level region, of the brightness level converting function calculated by the converting function calculating section 6 becomes.

(Control of Gradation Range)

By suitably setting the coefficient $\alpha$ in Equation (5) so that the coefficient $\alpha$ in Equation (5) has an appropriate value, the converting function calculating section 6 controls gradation ranges (that is, ranges to be subjected to the brightness level conversion) to be respectively allotted to the low brightness level region and the high brightness level region. Specifically, with a larger coefficient $\alpha$, the ratio of the sigmoid function g(i) in the brightness level converting function f(i) becomes higher. With a higher ratio of the sigmoid function g(i) in the brightness level converting function f(i), a greater portion of the brightness level converting function f(i) takes care of the brightness level conversion of the low brightness level region.

Meanwhile, with a smaller coefficient $\alpha$, the ratio of the sigmoid function h(i) in the brightness level converting function f(i) becomes higher. With a higher ratio of the sigmoid function h(i) in the brightness level converting function f(i), a greater portion of the brightness level converting function f(i) takes care of the brightness level conversion of the high brightness level region.

In other words, the converting function calculating section 6 controls the characteristic of the brightness level converting function f(i) by suitably setting $\alpha$ so that $\alpha$ has an appropriate value. That is, the converting function calculating section 6 can control, in a balanced manner, the improvement of the contrast in the low brightness levels and the improvement of the contrast in the high brightness levels in the image pickup signal whose brightness levels are converted by the brightness level converting section 7.

[EMBODIMENT 3]

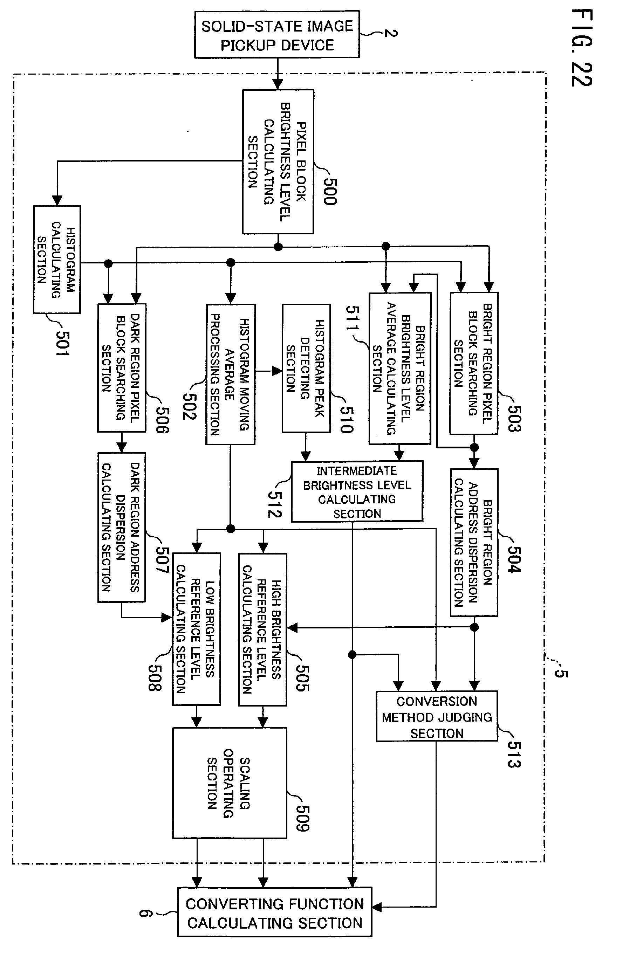

Referring to FIGS. 22 to 24(b), the following will explain Embodiment 3 of the present invention.

The general block configuration of a solid-state image pickup apparatus 1 of the present embodiment is identical with the solid-state image pickup apparatuses 1 of Embodiments 1 and 2. Detailed description of the apparatus 1 of the present embodiment is therefore not given.

A brightness level converting apparatus 3 converts the brightness level in an image pickup signal output from a solid-state image pickup device 2. As shown in FIG. 1, the brightness level converting apparatus 3 includes the image characteristic extracting section 5, the converting function calculating section 6 (function calculating means), and the brightness level converting section 7 (brightness level converting means).

The image characteristic extracting section 5 extracts the characteristic of an image which is picked up by the solid-state image pickup device 2. More specifically, on the basis of the image pickup signal output from the solid-state image pickup device 2, the image characteristic extracting section 5 generates various parameters indicating the characteristic of a pixel. Also, on the basis of the parameters generated, the characteristic extracting section 5 judges whether or not the picked-up image includes both a dark subject and a bright subject. In other words, the characteristic extracting section 5 judges if it is appropriate to subject the image pickup signal to the brightness level conversion of Embodiment 2. The image characteristic extracting section 5 outputs the judgment result as a single-bit conversion method judging signal. This judgment will be discussed in detail later.

(Calculation of Brightness Level Converting Function)

In the brightness level converting apparatus 3, the converting function calculating section 6 calculates a brightness level converting function which is used for converting the brightness levels. The converting function calculating section 6 calculates either a single-region brightness level converting function or a two-region brightness level converting function on the basis of the conversion method determined by the image characteristic extracting section 5. The single-region brightness level converting function is a converting function for a single brightness level region. More specifically, the single-region brightness level converting function is a function expressed by an S-shaped curve showing the relation between an input brightness level and an output brightness level and including one inflexion point as described in Embodiment 1. In the meanwhile, the two-region brightness level converting function is a converting function for two brightness level regions, and expressed by a curve which indicates the relation between the input brightness level and the output brightness level, includes three inflexion points, and is a downward concave curve on the left side of the inflexion point located leftmost.

That is, using the parameters calculated by the image characteristic extracting section 5, the converting function calculating section 6 calculates a brightness level converting function which is in conformity to the characteristic of the picked-up image and is optimal for the brightness level conversion of the image pickup signal. Details of this calculation will be described later.

(Brightness Level Converting Section 7)

Using the brightness level converting function calculated by the converting function calculating section 6, the brightness level converting section 7 converts the brightness levels in the image pickup signal. This brightness level converting function is stored in advance in a storage device (not shown). The brightness level converting section 7 refers to the brightness level converting function according to need.

Details of the brightness level converting function used by the brightness level converting section 7 when converting the brightness levels are identical with those described in Embodiments 1 and 2. Therefore, detailed explanations thereof are omitted here.

(Image Characteristic Extracting Section 5)

Now, referring to FIG. 22, the following will explain the details of the determination of the conversion method in the image characteristic extracting section 5. FIG. 22 is a block diagram that minutely shows the inside of the image characteristic extracting section 5 included in the brightness level converting apparatus 3 of Embodiment 3.

As shown in FIG. 22, the image characteristic extracting section 5 includes a pixel block brightness level calculating section 500, a histogram calculating section 501 (histogram calculating means), a histogram moving average processing section 502 (histogram smoothing means), the bright region pixel block searching section 503 (fourth cumulative number-of-pixels calculating means), a bright region address dispersion calculating section 504 (bright region pixel address dispersion calculating means), a high brightness reference level calculating section 505 (second cumulative number-of-pixels calculating means, first high brightness reference level calculating means, bright region pixel address dispersion judging means, second standard number-of-pixels setting means), a dark region pixel block searching section 506 (third cumulative number-of-pixels calculating means), a dark region address dispersion calculating section 507 (dark region pixel address dispersion calculating means), a low brightness reference level calculating section 508 (first cumulative number-of-pixels calculating means, first low brightness reference level calculating means, dark region pixel address dispersion judging means, first standard number-of-pixels setting means), a scaling operating section 509 (second low brightness reference level calculating means, second high brightness reference level calculating means), a histogram peak detecting section 510, a bright region brightness level average calculating section 511, an intermediate brightness level calculating section 512, and a conversion method judging section 513.

The histogram peak detecting section 510, the bright region brightness level average calculating section 511, and the intermediate brightness level calculating section 512 are identical with the histogram peak detecting section 510, the bright region brightness level average calculating section 511, and the intermediate brightness level calculating section 512 of Embodiment 2, respectively. Therefore, detailed explanations thereof are omitted.

Among the members above, the pixel block brightness level calculating section 500, the histogram calculating section 501, the histogram moving average processing section 502, the bright region pixel block searching section 503, the bright region address dispersion calculating section 504, the high brightness reference level calculating section 505, the dark region pixel block searching section 506, the dark region address dispersion calculating section 507, the low brightness reference level calculating section 508, and the scaling operating section 509 are identical with the pixel block brightness level calculating section 30, the histogram calculating section 31, the histogram moving average processing section 32, the bright region pixel block searching section 33, the bright region address dispersion calculating section 34, the high brightness reference level calculating section 35, the dark region pixel block searching section 36, the dark region address dispersion calculating section 37, the low brightness reference level calculating section 38, and the scaling operating section 39 of Embodiment 1, respectively. Therefore, detailed explanations thereof are omitted.

(Conversion Method Judging Section 513)

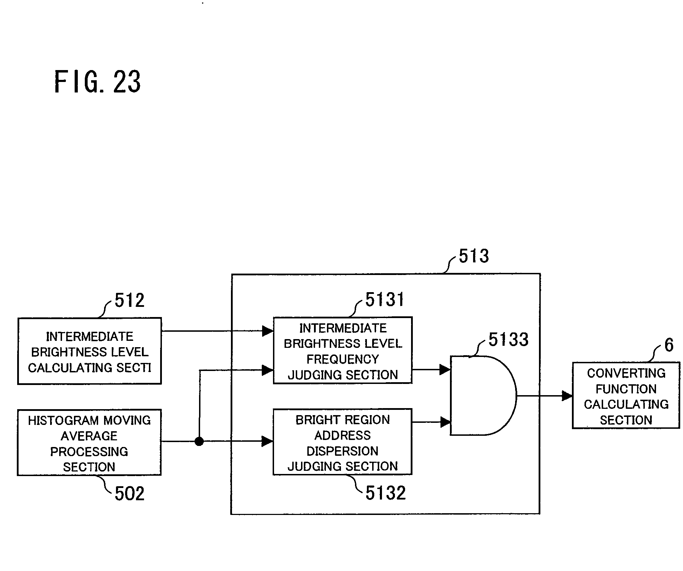

Referring to FIGS. 23 to 25(b), the following will explain the operation of the conversion method judging section 513.

FIG. 23 is a block diagram minutely showing the inside of the conversion method judging section 513 included in the image characteristic extracting section 5. As shown in FIG. 23, the conversion method judging section 513 includes an intermediate brightness level frequency judging section 5131, a bright region address dispersion judging section 5132, and a logical multiplication calculating section 5133.

(Intermediate Brightness Level Frequency Judging Section 5131)

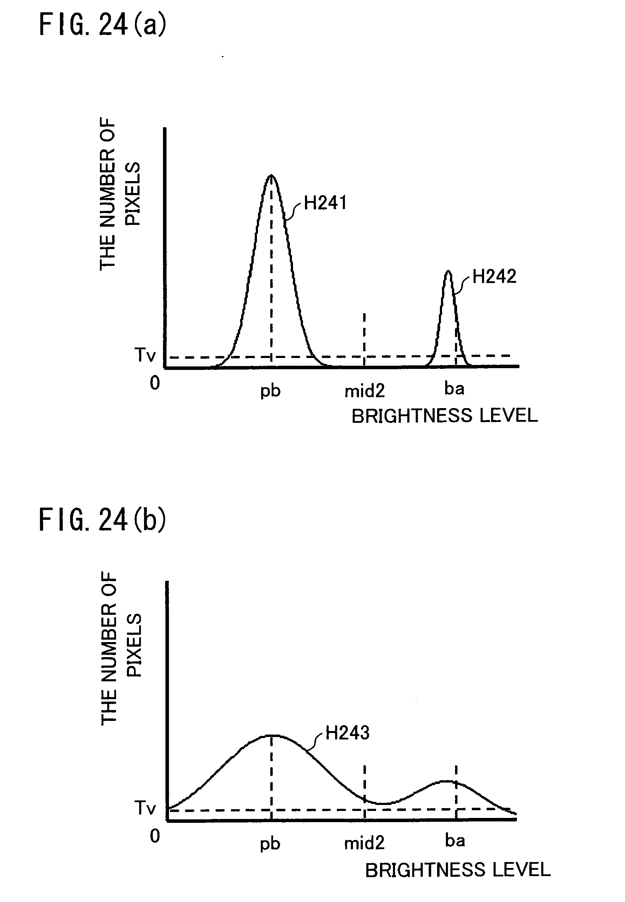

Referring to FIGS. 24(a) and 24(b), the following will explain the intermediate brightness level frequency judging section 5131. FIG. 24(a) is a histogram showing an example of the relation between an incident light quantity and the number of pixels in an image pickup signal in which the brightness distribution of a dark subject and the brightness distribution of a bright subject are both narrow and hence there is almost no intermediate brightness distribution. Meanwhile, FIG. 24(b) is a histogram showing an example of the relation between an incident light quantity and the number of pixels in an image pickup signal in which the brightness distribution of the dark subject and the brightness distribution of the bright subject are both wide and overlapped with each other and hence there is an intermediate brightness distribution.

In FIGS. 24(a) and 24(b), "pb" indicates the maximum peak brightness level calculated by the histogram peak detecting section 510. Indicated by "ba" is a bright region brightness level average value calculated by the bright region brightness level average calculating section 511. Indicated by "mid2" is an intermediate brightness level calculated by the intermediate brightness level calculating section 512.

To the intermediate brightness level frequency judging section 5131, the input brightness level mid2 indicating the intermediate brightness level is supplied from the intermediate brightness level calculating section 512. Moreover, to the intermediate brightness level frequency judging section 5131, a smoothed histogram is supplied from the histogram moving average processing section 502.

Receiving the input brightness level mid2 and the smoothed histogram, the brightness level frequency judging section 5131 calculates the number of pixels corresponding to the input brightness level mid2 in the smoothed histogram. Subsequently, the section 5131 judges whether or not the number of pixels thus calculated is larger than a predetermined reference number-of-pixels Tv.

(One Example of Judgment)

In the smoothed histogram shown in FIG. 24(a), the number of pixels corresponding to the input brightness level mid2 is smaller than the reference number-of-pixels Tv. On this account, the input brightness level mid2 is smaller than the reference number-of-pixels Tv. In this case, the intermediate brightness level frequency judging section 5131 outputs "1", which indicates true in two-valued logic, to the converting function calculating section 6. Meanwhile, in the smoothed histogram shown in FIG. 24(b), the number of pixels corresponding to the input brightness level mid2 is larger than the reference number-of-pixels Tv. In this case, the brightness level frequency judging section 5131 outputs "0", which indicates false in two-value logic, to the converting function calculating section 6.

In this manner, the intermediate brightness level frequency judging section 5131 judges whether the distributions of the respective brightness levels of the dark subject and bright subject in the image are both narrow or not. In other words, the intermediate brightness level frequency judging section 5131 judges whether or not the intermediate brightness level distribution is scarce in the image pickup signal output from the solid-state image pickup device 2. Then the two-valued logical value indicating the result of the judgment is output to the converting function calculating section 6.

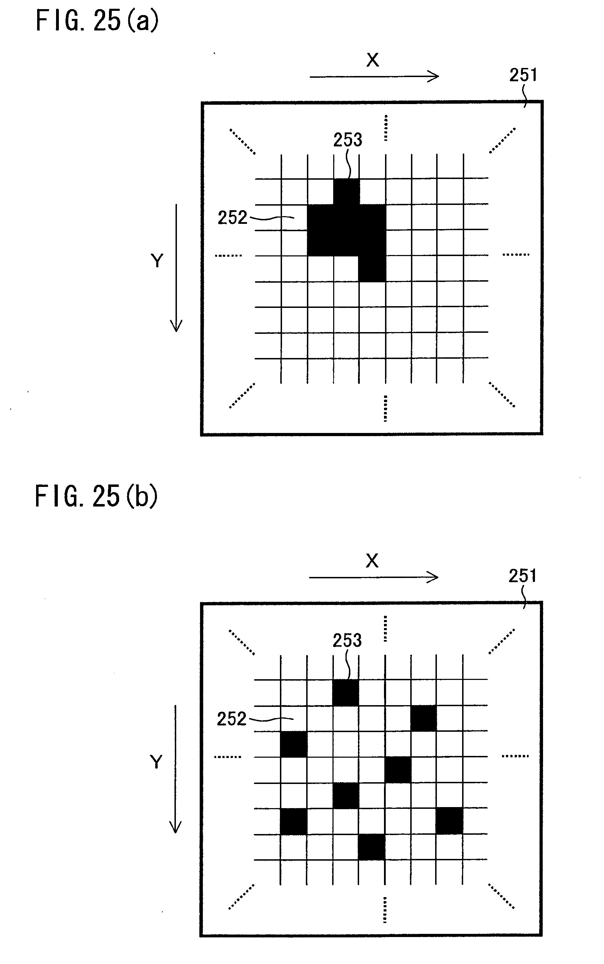

Referring to FIGS. 25(a) and 25(b), the following will explain the bright region address dispersion judging section 5132. FIG. 25(a) shows a case where, on an imaging surface 251, bright region pixel blocks 253 gather and form a chunk. On the other hand, FIG. 25(b) shows a case where, on the imaging surface 251, the bright region pixel blocks 253 are dispersed.

(Bright Region Address Dispersion Judging Section 5132)

The imaging surface 251 shown in FIGS. 25(a) and 25(b) is an imaging surface of the solid-state image pickup device 2. The pixel block 252 is one of pixel blocks which are on the imaging surface 251 and each of whose brightness level representative value is calculated by the pixel block brightness level calculating section 500. In FIG. 7, the pixel block 252 corresponds to the pixel block 77. The pixel block 253 is on the imaging surface 251, and is one of bright region pixel blocks each having the brightness level exceeding a bright region searching reference brightness level WL.

The bright region address dispersion judging section 5132 judges the degree of dispersion of the bright region pixel blocks 253 on the imaging surface 251. For example, on the imaging surface 251 shown in FIG. 25(a), it is judged that the bright region pixel blocks 253 gather and form a chunk. In this case, the bright region address dispersion judging section 5132 outputs "1", which indicates true in two-valued logic, to the logical multiplication calculating section 5133.

In the meanwhile, as shown in FIG. 25(b), in a case where it is judged that the bright region pixel blocks 253 be dispersed on the imaging surface 251, the bright region address dispersion judging section 5132 outputs "0", which indicates false in two-valued logic, to the logical multiplication calculating section 5133.

More specifically, the bright region address dispersion judging section 5132 compares (I) an X address dispersion value calculated by the bright region address dispersion calculating section 504 with (II) a predetermined reference dispersion value σTx. Furthermore, the bright region address judging section 5132 compares (I) a Y address dispersion value calculated by the bright region address dispersion calculating section 504 with (II) a predetermined reference dispersion value σTy. The reference dispersion values σTx and σTy are both experimentally determined, and stored in advance in a memory (not shown) in the brightness level converting apparatus 3.

If the bright region address dispersion judging section 5132 judges that the X address dispersion value is smaller than the reference dispersion value σTx and the Y address dispersion value is smaller than the reference dispersion value σTy, the bright region address dispersion judging section 5132 outputs "1" to the logical multiplication calculating section 5133. In the meanwhile, if it is judged that the X address dispersion value be larger than the reference dispersion value σTx and/or the Y address dispersion value be larger than the reference dispersion value σTy, the bright region address dispersion judging section 5132 outputs "0" to the logical multiplication calculating section 5133.

In this manner, the bright region address dispersion judging section 5132 judges whether or not the bright region pixel blocks 253 gather and form a chunk. That is, the bright region address dispersion judging section 5132 calculates the dispersion values in reference to the addresses of the bright region pixel blocks 253, and judges whether or not the dispersion values thus calculated are smaller than the respective reference dispersion values. With this, it is determined whether or not the region where the bright region pixel blocks exist expresses meaningful information. If the calculated dispersion values are smaller than the respective reference dispersion values, it is judged that meaningful information is not expressed, and hence "0" is output as a two-valued logical value. On the other hand, if the calculated dispersion values are larger than the respective reference dispersion values, it is judged that meaningful information is expressed, and hence "1" is output as a two-valued logical value.

The logical multiplication calculating section 5133 receives the output from the intermediate brightness level frequency judging section 5131 and the output from the bright region address dispersion judging section 5132. Receiving these outputs, the logical multiplication calculating section 5133 calculates the logical multiplication of the supplied two two-valued logical values. Also, as a single-bit conversion method determining signal, the logical multiplication calculating section 5133 supplies the calculation result to the converting function calculating section 6.

(Conclusion)

As described above, the conversion method judging section 5 outputs "1", which indicates true in two-valued logic, to the converting function calculating section 6, in the following case: (I) the intermediate brightness level frequency judging section 5131 judges that the brightness level distribution of a dark subject in an image thus picked up and the brightness level distribution of a bright subject in the image are both narrower than respective reference distributions, and there is almost no intermediate brightness distribution, and (II) the bright region address dispersion judging section 5132 judges that the bright region pixel blocks 253 gather and form a chunk, and the region where the bright region pixel blocks 253 exist expresses meaningful information. In cases other than the above, the conversion method judging section 5 outputs "0", which indicates false in two-valued logic, to the converting function calculating section 6.

(Calculation of Converting Function)

Referring to FIG. 26, the following will explain the operation of the converting function calculating section 6. FIG 26 shows the converting function calculating section 6 of Embodiment 3. As shown in FIG. 26, the converting function calculating section 6 includes a single-region brightness level converting function calculating section 61, a two-region brightness level converting function calculating section 62, and a brightness level converting function selecting section 63.

(Single-Region Brightness Level Converting Function Calculating Section 61)

To the single-region brightness level converting function calculating section 61, a low brightness reference level ABL, a high brightness reference level AWL, and a parameter λ are supplied. Using the supplied data, the single-region brightness level converting function calculating section 61 calculates a brightness level converting function used for converting a single brightness level region. More specifically, the single-region brightness level converting function calculating section 61 calculates the single-region brightness level converting function expressed by an S-shaped curve which represents the relation between the input brightness level and the output brightness level and includes one inflexion point.

(Two-Region Brightness Level Converting Function Calculating Section 62)

The two-region brightness level converting function calculating section 62 receives a low brightness reference level ABL, a high brightness reference level AWL, an input brightness level mid2 indicating an intermediate brightness level, and parameters λg and λh. The two-region brightness level converting function calculating section 62 calculates a brightness level converting function used for converting two brightness level regions. More specifically, the two-region brightness level converting function calculating section 62 calculates a two-region brightness level converting function (second brightness level converting function) which is expressed as a curve that indicates the relation between the input brightness level and the output brightness level, and includes one inflexion point indicating an input brightness level lower than the standard brightness level and one inflexion point indicating an input brightness level higher than the standard brightness level.

On the basis of the output from the conversion method judging section 5, the brightness level converting function selecting section 63 selects either the single-region brightness level converting function or the two-region brightness level converting function.

If the output from the conversion method judging section 5 is "1", the two-region brightness level converting function calculating section 62 calculates the two-region brightness level converting function. The two-region brightness level converting function calculating section 62 generates data representing the two-region brightness level converting function thus calculated, and outputs the data to the brightness level converting function selecting section 63. As a result of this, the brightness level converting function selecting section 63 outputs to the brightness level converting section 7, the brightness level converting function calculated by the two-region brightness level converting function calculating section 62.

If the output from the conversion method judging section 5 is "0", the single-region brightness level converting function calculating section 61 calculates the single-region brightness level converting function. The single-region brightness level converting function calculating section 61 generates data representing the brightness level converting function thus calculated, and outputs the data to the brightness level converting function selecting section 63. As a result of this, the brightness level converting function selecting section 63 outputs to the brightness level converting section 7, the single-region brightness level converting function calculated by the single-region brightness level converting function calculating section 61.

Using the brightness level converting function represented by the data thus inputted, the brightness level converting section 7 converts the brightness levels in the image pickup signal. That is, the single-region brightness level converting function is used when the single-region brightness level converting function is inputted. On the other hand, the two-region brightness level converting function is used when the two-region brightness level converting function is inputted. Since specific procedures of the brightness level conversion have already been explained in Embodiments 1 and 2, the specific explanations thereof are omitted here.

(Conclusion)

As described above, in the present embodiment, the image characteristic extracting section 5 judges on the basis of the image pickup signal whether a brightness level converting function suitable for converting the brightness levels in an image pickup signal supplied from the solid-state image pickup device 2 is a single-region brightness level converting function or a two-region brightness level converting function. On the basis of this judgment result, the converting function calculating section 6 calculates, using parameters calculated by the image characteristic extracting section 5, the brightness level converting function suitable for converting the brightness levels in the image pickup signal. As a result, the brightness level converting section 7 converts the brightness levels in the image pickup signal by using the brightness level converting function calculated by the converting function calculating section 6. Finally, the image pickup signal whose brightness levels are converted is supplied to the image displaying apparatus 4, and the image displaying apparatus 4 displays an image represented by the image pickup signal.

As described above, as to an image pickup signal representing an image including two subjects between which the difference in the light quantity is large, the brightness level converting apparatus 3 converts such an image pickup signal using the two-region brightness level converting function. Examples of the image including two subjects between which the difference in the light quantity is large are: a photo taken around the end of a tunnel, which shows both a sight inside the tunnel and a sight outside the tunnel and under the sunlight; and a photo taken in a room with an window, which shows both a sight inside the room and a sight outside the window and under the sunlight. On the other hand, as to an image pickup signal representing one subject or a plurality of subjects having relatively similar light intensities, the brightness level converting section 7 converts the brightness levels by using the single-region brightness level converting function.

Therefore, to convert the brightness levels in the image pickup signal, the brightness level converting apparatus 3 uses a suitable brightness level converting function corresponding to the light quantity characteristic of the image of the subject. It is therefore possible to appropriately improve the contrast of the subject.

(Program and Recording Medium)

The above-described members are functional blocks. Therefore, these members can be realized in such a manner that computing means such as a CPU executes a brightness level converting program stored in a storage section (not shown) so as to control peripheral circuits such as an input/ output circuit (not shown).

For the reason above, an object of the present invention can be realized as follows: a recording medium, on which a program code (e.g. an execute form program, intermediate code program, source program) of the brightness level converting program that realizes the aforesaid functions is recorded in a computer-readable manner, is supplied to the brightness level converting apparatus, and a computer (or CPU, MPU, DSP) in the brightness level converting apparatus reads out the program code recorded on the recording medium, and executes the program code.

In this case, the program code per se, which is read out from the recording medium, realizes the aforesaid functions. On this account, the recording medium that records the program code is a constituent feature of the present invention.

In the meanwhile, the aforesaid members may be realized as hardware whose functions are identical with those of the above-described software. In this case, an object of the present invention is realized by the brightness level converting apparatus which is hardware.

The computing means that reads out and executes the program code is a single member. Alternatively, a plurality of computing means, which are connected with each other via the internal bus of the brightness level converting apparatus or via various types of communication paths, execute the program code in a cooperating manner.

The program code directly executable by the computing means is supplied to the brightness level converting apparatus by means of a computer-readable recording medium that stores the program code. Alternatively, the program code may be supplied to the brightness level converting apparatus in such a manner that data which can generate the program code by means of, for example, decompression (described later) is stored in a computer-readable recording medium, and the recording medium is supplied to the brightness level converting apparatus. Also, the program code or data may be distributed or sent to the brightness level converting apparatus via a communications network that transmits data using a wired or wireless communication path. In any case, the program code is executed by the computing means of the brightness level converting apparatus.

The program code or data can be transmitted via various types of communications networks, which are not limited to any particular types. Specific examples of such communications networks include the Internet, intranet, extranet, LAN, ISDN, VAN, CATV communications network, virtual private network, telephone network, mobile communications network, and satellite communications network. Also, the transmission medium constituting the communications network is not limited to any particular ones, either. More specifically, the following transmission mediums can be used: line conforming to IEEE 1394, USB line, power line, cable television line, telephone line, and ADSL line. Moreover, as the transmission medium, infrared (IrDA, remote controller), Bluetooth, and IEEE802.11 communication channels, HDR, mobile communications networks, satellite lines, and digital terrestrial television networks may be used.

The recording medium used for supplying the program code to the brightness level converting apparatus is preferably detachable before the supply of the program code. After the supply of the program code, the recording medium may be detachable with respect to the brightness level converting apparatus, or may be integrated with the brightness level converting apparatus in an unseparatable manner.

As long as the program code is recorded, the recording medium may be writable (rewritable) or not writable (rewritable). The recording medium may be volatile or non-volatile. The method of recording the program code onto the recording medium and the shape of the recording medium are optionally determined.

Examples of the recording medium satisfying the above-described requirements include: a tape, such as a magnetic tape and a cassette tape; a magnetic disk, such as a floppy® disk and a hard disk; a disc, such as a CD-ROM/MO/MD/DVD; a card-type memory, such as an IC card and an optical card; and a semiconductor memory, such as a mask ROM, an EPROM, an EEPROM, or a flash ROM. Also, a memory in a computing means such as CPU is an example of the above.

It is noted that a program used for reading out the program code from the recording medium and storing the code in a main memory is stored in advance in the brightness level converting apparatus, in a computer-executable manner. In a case where the program code is supplied to the brightness level converting apparatus via a communications network, a program used for downloading the program code from the communications network is stored in advance in the brightness level converting apparatus, in a computer-executable manner.

The program code commands the computing means to perform all of the aforesaid processing means. The computer may already store a basic program (e.g. operating system and library) which is capable of being executed by calling up at least a part of the procedures of the program code, by means of predetermined steps. In such a case, the program code of the brightness level converting program may be a program code in which at least a part of the procedures of the program code is replaced with a code or a pointer that commands the computing means to call up the basic program.

The recording medium stores the brightness level converting program in such a manner that a program code is stored in a real memory. More specifically, the brightness level converting program is stored in the recording medium, in the form of allowing the computing means to access the recording medium and execute the program code. Alternatively, the brightness level converting program may be stored in the recording medium, in the form before the program code is provided in the real memory and after the program code is installed in a recording medium (e.g. hard disk) in such a manner that the computing means is allowed to always access the program code. Also, the brightness level converting program may be stored in the recording medium, in the form before the program code is installed from a communications network or a transportable recording medium to a local recording medium.

The brightness level converting program is not necessarily a compiled object code. For example, the brightness level converting program may be stored in the recording medium, as a source code. Alternatively, the brightness level converting program may be stored in the recording medium, as an intermediate code which is generated while interpreting or compiling is performed.

In any case, the program code (intermediate code) stored in the recording medium is required to be capable of being converted into a form which is executable by the computing means.

This conversion can be achieved by one of the following ways, or a combination of them: a predetermined form conversion program decompresses a compressed program code; a predetermined form conversion program decodes an encoded program code; or a source code is interpreted, compiled, linked, or provided in a real memory. This makes it possible to exert the effect above, irrespective of how the brightness level converting program is stored in the recording medium.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

For example, the brightness level converting apparatus 3 converts the brightness levels in the image pickup signal by using a brightness level converting function expressed by a curve which indicates the relation between the input brightness level and the output rightness level and includes at least one inflexion point. That is, the number of inflexion points may be one, or may be two or more. The converting function calculating section 6 calculates the brightness level converting function expressed by a curve which includes an inflexion point(s), the number of which is suitably determined depending on the characteristic of the subject image in the picked-up image.

The brightness level converting apparatus of the present invention, which converts brightness levels in an image pickup signal output from a solid-state image pickup device, can be integrated into a digital camera, video camera or the like.

Moreover, the brightness level converting apparatus of the present invention is preferably arranged such that the brightness level converting function is expressed by an S-shaped curve which indicates the relation between the input brightness level and the output brightness level and includes one inflexion point.

According to the arrangement above, in the brightness level converting apparatus, the brightness level converting means converts the brightness levels in the image pickup signal by using the brightness level converting function expressed by an S-shaped curve which indicates the relation between the input brightness level and the output brightness level and includes one inflexion point. The S-shaped curve here means a curve whose slope becomes steeper toward the inflexion point. In other words, according to the brightness level converting function used by the brightness level converting means, the change in the output brightness level corresponding to the change in the input brightness level becomes more significant toward the inflexion point.

In this manner, the brightness level converting means reduces the contrast in the low brightness level range of the image pickup signal, using the brightness level converting function having the aforesaid characteristic. At the same time, the brightness level converting means reduces the contrast in the high brightness level range while keeping the gradation to be appropriate. With this, the contrast in the intermediate brightness level range in the image pickup signal is significantly improved. On this account, an image represented by the image pickup signal after being subjected to the brightness level conversion looks natural, as compared to a case where a partial brightness level region of the image pickup signal is cut out and the gradation is linearly increased.

The brightness level converting function is preferably a sigmoid function or a quadratic function. In particular, a quadratic brightness level converting function is simpler than a sigmoid brightness level converting function. Therefore, in a case where the brightness level converting function is a quadratic function, a calculation amount required for converting the brightness levels is fewer than the case of the sigmoid brightness level converting function. On this account, the brightness levels are converted in a short period of time, as compared to a case where the sigmoid brightness level converting function is used. It is therefore possible to convert the brightness levels in the image pickup signal, in a short period of time. Furthermore, in a case where a brightness level converting apparatus adopting a quadratic function is constructed as hardware such as an electronic circuit, the size of the hardware is small as compared to a case of the brightness level converting apparatus using the sigmoid brightness level converting function. It is therefore possible to realize a brightness level converting apparatus that consumes less amount of power.

Preferably, the brightness level converting apparatus of the present invention further comprises function calculating means for calculating the brightness level converting function on the basis of a characteristic of the image pickup signal, and said brightness level converting means converting the brightness levels in the image pickup signal by using the brightness level converting function calculated by said function calculating means.

According to the arrangement above, the function calculating means calculates the brightness level converting function, based on the characteristic of the image represented by the image pickup signal. Using the brightness level converting function calculated based on the characteristic of the image, the brightness level converting means converts the brightness levels in the image pickup signal. On this account, the brightness level converting apparatus performs optimal brightness level conversion corresponding to the characteristic of the image, so that a natural-looking image is obtained.

Preferably, the brightness level converting apparatus of the present invention further comprises histogram calculating means for calculating a histogram which indicates a relation in the image pickup signal between the brightness level and the number of pixels, and said function calculating means calculating the brightness level converting function on the basis of the histogram calculated by said histogram calculating means.

According to the arrangement above, in the brightness level converting apparatus, the function calculating means calculates the brightness level converting function, based on the histogram. Therefore, the function calculating means can calculate an optimal brightness level converting function in agreement with an image of a subject. Thus the brightness level converting means can convert the brightness levels in the image pickup signal, using the brightness level converting function optimal for the image of the subject. In short, a natural-looking image is obtained.

Preferably, the brightness level converting apparatus of the present invention further comprises histogram smoothing means for smoothing the histogram.

According to the arrangement above, the histogram smoothing means smoothes the histogram by, for example, moving average processing, and converts the histogram into a smooth histogram having few irregularities. This makes it possible to restrain the fluctuation of the histogram due to the steep change in the subject. Also, based on the smoothed histogram, the function calculating means calculates the brightness level converting function. Therefore, the brightness level converting means converts the brightness levels in the image pickup signal, using the brightness level converting function with small parameter variation. On this account, in a case where the image pickup signal is supplied to the image displaying apparatus after the brightness level conversion, flickers in the image are restrained.

Preferably, the brightness level converting apparatus further comprises: first cumulative number-of-pixels calculating means for calculating a first cumulative number of pixels by cumulatively counting the number of pixels each of whose brightness level is within a range from a lowest brightness level to a first standard brightness level in the histogram; first low brightness reference level calculating means for calculating the first standard brightness level as a first low brightness reference level if the first cumulative number of pixels exceeds a predetermined first standard number of pixels; second cumulative number-of-pixels calculating means for calculating a second cumulative number of pixels by cumulatively counting the number of pixels each of whose brightness level is within a range from a second standard brightness level to a highest brightness level in the histogram; and first high brightness reference level calculating means for calculating the second standard brightness level as a first high brightness reference level if the second cumulative number of pixels exceeds a predetermined second standard number of pixels, and said function calculating means calculating the brightness level converting function on the basis of the first low brightness reference level and the first high brightness reference level.

The predetermined first standard number of pixels is preferably a value that is 0.05 % to 0.5 % of the total cumulative number of pixels in the histogram. The predetermined second standard number of pixels is preferably a value that is 0.05 % to 0.5 % of the total cumulative number of pixels in the histogram.

According to the arrangement above, based on the first low brightness reference level and the first high brightness reference level, the brightness level converting function is calculated. The first low brightness reference level and the first high brightness reference level are calculated based on the cumulative number of pixels in the histogram. On this account, the first low brightness reference level and the first high brightness reference level are statistically stable parameters. That is, the function calculating means calculates the brightness level converting function, based on the parameters which are statistically stable. This makes it possible to restrain the temporal variation of the brightness level converting function thus calculated. The brightness levels in the image pickup signal are therefore stably converted.

Preferably, the brightness level converting apparatus of the present invention further comprises: dark region pixel address dispersion calculating means for calculating as a dark region pixel address dispersion a dispersion, in the image pickup signal, of pixel addresses of pixels each of whose brightness level is lower than a predetermined dark region standard brightness level; dark region pixel address dispersion judging means for judging whether or not the dark region pixel address dispersion is larger than a predetermined first standard pixel address dispersion; and first standard number-of-pixels setting means for, if a judgment result obtained by said dark region pixel address dispersion judging means is true, setting the predetermined first standard number of pixels so that the predetermined first standard number of pixels has a value that is larger than a predetermined value.

According to the arrangement above, the function calculating means calculates the brightness level converting function in which the lower limit in the brightness levels that are subjected to the brightness level conversion is raised. Therefore, when converting the brightness levels by using the brightness level converting function, the brightness level converting means can reduce the allocation of the gradation in the darkest part region, and can increase the allocation of the gradation in other region(s). As a result, the contrast of the image represented by the image pickup signal after the brightness conversion is improved overall.

Preferably, the brightness level converting apparatus of the present invention further comprises: bright region pixel address dispersion calculating means for calculating as a bright region pixel address dispersion a dispersion, in an image represented by the image pickup signal, of pixel addresses of pixels each of whose brightness level is higher than a predetermined bright region standard brightness level; bright region pixel address dispersion judging means for judging whether or not the bright region pixel address dispersion is larger than a predetermined second standard pixel address dispersion; and second standard number-of-pixels setting means for, if a judgment result obtained by said bright region pixel address dispersion judging means is true, setting the predetermined second standard number of pixels so that the predetermined second standard number of pixels has a value that is larger than a predetermined value.

According to the arrangement above, the function calculating means calculates the brightness level converting function in which the upper limit in the brightness levels that are subjected to the brightness level conversion is lowered. Therefore, when converting the brightness levels by using the brightness level converting function, the function calculating means can reduce the allocation of the gradation in the brightest part region in the image pickup signal, and can increase the allocation of the gradation in other region(s). As a result, the contrast of the image represented by the image pickup signal after the brightness level conversion is improved overall.

Preferably, the brightness level converting apparatus of the present invention further comprises: third cumulative number-of-pixels calculating means for calculating a third cumulative number of pixels by cumulatively counting the number of pixels each of whose brightness level is within a range from the lowest brightness level to a third standard brightness level in the histogram; and dark region standard brightness level calculating means for calculating the third standard brightness level as the dark region standard brightness level if the third cumulative number of pixels exceeds a predetermined third standard number of pixels. The predetermined third standard number of pixels is preferably a value that is 0.5 % to 1.5 % of a total cumulative number of pixels in the histogram.

According to the arrangement above, the target of examination of the dispersion of pixel addresses of pixels is an image pickup region on the imaging surface, which region has a limited total size. On this account, it is possible to define in advance an area, on the imaging surface, of the subject of the darkest part that is the important image pickup target, which area should be examined.

Preferably, the brightness level converting apparatus of the present invention further comprises: fourth cumulative number-of-pixels calculating means for calculating a fourth cumulative number of pixels by cumulatively counting the number of pixels each of whose brightness level is within a range from a fourth standard brightness level to the highest brightness level in the histogram; and bright region standard brightness level calculating means for calculating the fourth standard brightness level as the bright region standard brightness level if the fourth cumulative number of pixels exceeds a predetermined fourth standard number of pixels. The predetermined fourth standard number of pixels is preferably a value that is 0.5 % to 1.5 % of a total cumulative number of pixels in the histogram.

According to the arrangement above, the target of examination of the dispersion of pixels addresses of pixels is an image pickup region on the imaging surface, which region has a limited total size. On this account, it is possible to define in advance an area, on the imaging surface, of the subject of the brightest part that is the important image pickup target, which area should be examined.

Preferably, the brightness level converting apparatus of the present invention further comprises: second low brightness reference level calculating means for calculating a second low brightness reference level by subtracting from the first low brightness reference level, a value obtained by multiplying a difference value between the first high brightness reference level and the first low brightness reference level by a predetermined first coefficient; and second high brightness reference level calculating means for calculating a second high brightness reference level by adding to the first high brightness reference level, a value obtained by multiplying the difference value between the first high brightness reference level and the first low brightness reference level by a predetermined second coefficient, and said function calculating means calculating the brightness level converting function on the basis of the second low brightness reference level and the second high brightness reference level.

In the arrangement above, the predetermined first coefficient preferably has a value in a range from 0.1 to 0.6. More preferably, the predetermined first coefficient is approximately 0.5. Also, the predetermined second coefficient preferably has a value in a range from 0.1 to 0.6. More preferably the predetermined second coefficient is approximately 0.5.

According to the arrangement above, the upper limit and the lower limit of the calculated brightness level are calculated in accordance with the change of the distribution of the brightness levels of the image pickup signal.

The brightness level converting apparatus of the present invention is preferably arranged such that, the brightness level converting function is expressed by a curve which indicates the relation between the input brightness level and the output brightness level and includes (I) one inflexion point indicating the input brightness level that is lower than a standard brightness level and (II) one inflexion point indicating the input brightness level that is higher than the standard brightness level.

According to the above, the brightness level converting means converts the brightness levels in the image pickup signal, using the brightness level converting function expressed by a curve which indicates the relation between the input brightness level and the output brightness level and includes a dark inflexion point and a bright inflexion point. The dark inflexion point is an inflexion point indicating the input brightness level lower than the standard brightness level. The bright inflexion point is an inflexion point indicating the input brightness level higher than the standard brightness level.

Therefore, the brightness level converting means converts the brightness levels of a part where the dark subject exists, by means of a part of the brightness level converting function, which part is an S-shaped curve including a dark inflexion point. In the meanwhile, the brightness level converting means converts the brightness levels of a part where the bright subject exists, by means of a part of the brightness level function, which part is an S-shaped curve including a bright inflexion point.

As a result of the aforesaid brightness level conversion, the brightness level converting means reduces the contrast in a range where each of the brightness levels is lower than the dark inflexion point, in the dart subject. At the same time, the brightness level converting means reduces the contrast in a range where each of the brightness levels is higher than the dark inflexion point, while keeping the gradation to be appropriate. In the case of the bright subject, the contrast in a range where each of the brightness levels is lower than the high brightness level is reduced in a similar manner. Also, while keeping the gradation to be appropriate, the contrast in a range where each of the brightness levels is higher than the high brightness level is reduced.

On this account, in the case of both dark subject and bright subject, the brightness level converting means can significantly improve the contrast in the range of relatively intermediate brightness levels. On this account, an image of the subject, which is represented by the image pickup signal having been subjected to the brightness level conversion, looks natural and has a high contrast, as compared to a case where, from the image pickup signal representing an image including a dark subject and a bright subject, the brightness level regions corresponding to the respective subjects are extracted, and the gradation is linearly extended.

The brightness level converting function is preferably arranged such that, the brightness level converting function is a weighting addition function of (I) a dark region S-shaped function expressed by an S-shaped curve which includes one inflexion point and indicates the relation between the input brightness level and the output brightness level in a dark region to which the brightness levels each of which is lower than the standard brightness level belong and (II) a bright region S-shaped function expressed by an S-shaped curve which includes one inflexion point and indicates the relation between the input brightness level and the output brightness level in a bright region to which the brightness levels each of which is higher than the standard brightness level belong.

According to the arrangement above, the brightness level converting function is a weighting addition function of a dark region S-shaped function and a bright region S-shaped function. The dark region S-shaped function expresses an S-shaped curve which includes one inflexion point and indicates the relation between the input brightness level and the output brightness level in a dark region. The dark region includes brightness levels each of which is lower than the standard brightness level. That is, the dark region S-shaped function is used for converting the brightness levels in the image pickup signal, each of which is lower than the standard brightness level.

Meanwhile, the bright region S-shaped function represents an S-shaped curve which includes one inflexion point and indicates the relation between the input brightness level and the output brightness level in a bright region. The bright region includes brightness levels each of which is higher than the standard brightness level. That is, the bright region S-shaped function is used for converting the brightness levels in the image pickup signal, each of which is higher than the standard brightness level.

In this manner, the brightness level converting function used by the brightness level converting apparatus of the present arrangement is a weighting addition function of a dark region S-shaped function and a bright region S-shaped function. Therefore, in the brightness level converting apparatus, the gradation range allocated to each of the low brightness level region and the high brightness level region changes in accordance with the weighting coefficient used for the weighing addition. For this reason, in regard to the image pickup signal after the brightness level conversion, the brightness level converting apparatus adopting the above-described brightness level converting function can control, in a balanced manner, the improvement of the contrast in the low brightness levels and the improvement of the contrast in the high brightness levels.

At least one of the dark region S-shaped function and the bright region S-shaped function is preferably a sigmoid function.

Preferably, the brightness level converting apparatus of the present invention further comprises function calculating means for calculating the brightness level converting function by weighting, using a predetermined weighting coefficient, the dark region S-shaped function and the bright region S-shaped function on the basis of a characteristic of the image pickup signal, and said brightness level converting means converting the brightness levels in the image pickup signal by using the brightness level converting function calculated by said function calculating means.

According to the arrangement above, the function calculating means weights the dark region S-shaped function and bright region S-shaped function using the predetermined weighting coefficient, based on the characteristic of the image represented by the image pickup signal. By doing so, the function calculating means calculates the brightness level converting function including two inflexion points. Using this brightness level converting function calculated based on the characteristic of the image, the brightness level converting means converts the brightness levels in the image pickup signal. On this account, the brightness level converting apparatus performs optimal brightness level conversion corresponding to the characteristic of the image of the subject, both in the dark region (low brightness level region) and bright region (high brightness level region), and hence a natural-looking image is obtained.

Preferably, the brightness level converting apparatus of the present invention further comprises histogram calculating means for calculating a histogram which indicates a relation between the brightness level and the number of pixels in the image pickup signal, and said function calculating means calculating the brightness level converting function on the basis of the histogram calculated by said histogram calculating means.

According to the arrangement above, in the brightness level converting apparatus, the function calculating means calculates the brightness level converting function including two inflexion points, based on the histogram. On this account, the function calculating means can calculate the optimal brightness level converting function corresponding to the image of the subject. For this reason, regarding each of the dark subject image and bright subject image, the brightness level converting means can convert the brightness levels in the image pickup signal, using the brightness level converting function corresponding to the image. It is therefore possible to obtain a natural-looking image.

Preferably, the brightness level converting apparatus of the present invention further comprises: first cumulative number-of-pixels calculating means for calculating a first cumulative number of pixels by cumulatively counting the number of pixels each of whose brightness level is within a range from a lowest brightness level to a first standard brightness level in the histogram; low brightness reference level calculating means for calculating the first standard brightness level as a low brightness reference level if the first cumulative number of pixels exceeds a predetermined first standard number of pixels; second cumulative number-of-pixels calculating means for calculating a second cumulative number of pixels by cumulatively counting the number of pixels each of whose brightness level is within a range from a second standard brightness level to a highest brightness level in the histogram; high brightness reference level calculating means for calculating the second standard brightness level as a high brightness reference level if the second cumulative number of pixels exceeds a predetermined second standard number of pixels; bright region pixel average brightness level calculating means for calculating as a bright region pixel average brightness level, an average value of the brightness levels of pixels which are included in the image and each of whose brightness level is higher than a predetermined bright region standard brightness level; dark region peak brightness level calculating means for calculating as a dark region peak brightness level, the brightness level of the pixel belonging to a largest number of pixels in a range, in the histogram, to which the brightness levels each of which is lower than a predetermined dark region standard brightness level belong; and intermediate brightness level calculating means for calculating an intermediate brightness level that is an intermediate value of the bright region pixel average brightness level and the dark region peak brightness level, and said function calculating means calculating the brightness level converting function by (I) calculating the dark region S-shaped function and the bright region S-shaped function on the basis of the low brightness reference level, the high brightness reference level and the intermediate brightness level and (II) weighting, using the predetermined weighting coefficient, the dark region S-shaped function calculated and the bright region S-shaped function calculated.

According to the arrangement above, the function calculating means calculates the dark region S-shaped function and the bright region S-shaped function, based on the low brightness reference level, high brightness reference level, and intermediate brightness reference level. Therefore, in a case where the image picked up by the solid-state image pickup device includes both a dark subject and a bright subject and the light quantities thereof are significantly different from each other, the function calculating means calculates a dark region S-shaped function expressed by a curve representing the relation between the input brightness level and the output brightness level and includes the inflexion point provided at a substantially center of the brightness level distribution of the dark subject. Meanwhile, a bright region S-shaped function, which is expressed by a curve including an inflexion point provided at a substantially center of the brightness level distribution of the dark subject, is also calculated.

Therefore, the function calculating means weights the calculated dark region S-shaped function and bright region S-shaped function using the weighting coefficient, so as to calculate the brightness level converting functions suitable for converting the brightness levels of the dark subject and the bright subject in the image having been picked up. On this account, the brightness level converting means converts both the dark subject and bright subject in the image into the dark subject and bright subject each of which has an improved contrast.

Therefore, the brightness level converting apparatus makes it possible to obtain an image in which a dark subject and a bright subject look natural.

Preferably, the brightness level converting apparatus of the present invention further comprises function calculating means for calculating on the basis of a characteristic of the image pickup signal (I) a first brightness level converting function expressed by an S-shaped curve which indicates the relation between the input brightness level and the output brightness level and includes one inflexion point or (II) a second brightness level converting function expressed by a curve which indicates the relation between the input brightness level and the output brightness level and includes (i) one inflexion point indicating the input brightness level that is lower than a standard brightness level and (ii) one inflexion point indicating the input brightness level that is higher than the standard brightness level, and said brightness level converting means converting the brightness levels in the image pickup signal by using the first brightness level converting function or the second brightness level converting function calculated by said function calculating means.

Preferably, the brightness level converting apparatus of the present invention further comprises histogram calculating means for calculating a histogram which indicates a relation between the brightness level and the number of pixels in the image pickup signal, and said function calculating means calculating the first brightness level converting function or the second brightness level converting function on the basis of the histogram calculated by said histogram calculating means.

According to the arrangement above, the function calculating means calculates the first brightness level converting function or the second brightness level converting function, based on the histogram indicating the relation between the brightness level and the pixels in the image pickup signal. For example, if it is judged based on the histogram that the image having been picked up includes one subject, the function calculating means calculates the first brightness level converting function including one inflexion point. On this account, the function calculating means converts, using the first brightness level converting function, the brightness levels in the image pickup signal representing the image including one subject.

In the meanwhile, in a case where it is judged based on the histogram that the image having been picked up includes one dark subject and one bright subject, the function calculating means calculates the second brightness level converting function including two inflexion points. Therefore, the function calculating means converts, using the second brightness level converting function, the brightness levels in the image pickup signal representing the image including two subjects. As a result of the above, the contrast of each of the dark subject and bright subject is controlled in an optimum manner.

As described above, the brightness level converting means can convert the brightness levels in the image pickup signal, using the brightness level converting function suitable for the brightness level conversion of each subject in the image having been picked up. Therefore, the brightness level converting apparatus makes it possible to obtain a natural-looking image.

Preferably, the brightness level converting apparatus of the present invention further comprises: bright region pixel average brightness level calculating means for calculating as a bright region pixel average brightness level, an average value of the brightness levels of pixels which are included in the image represented by the image pickup signal and each of whose brightness level is higher than a predetermined bright region standard brightness level; dark region peak brightness level calculating means for calculating as a dark region peak brightness level, the brightness level of the pixel belonging to a largest number of pixels in a range, in the histogram, to which the brightness levels each of which is lower than a predetermined dark region standard brightness level belong; and intermediate brightness level calculating means for calculating an intermediate brightness level that is an intermediate value of the bright region pixel average brightness level and the dark region peak brightness level, and said function calculating means calculating the first brightness level converting function if the number of pixels each of whose brightness level is the intermediate brightness level in the histogram is larger than a predetermined standard number of pixels.

According to the arrangement above, the function calculating means judges that the number of pixels having the intermediate brightness levels is more than a predetermined number in the image having been picked up, when, in the histogram, the number of pixels having the intermediate brightness levels is larger than the predetermined standard number of pixels. On this account, the function calculating means judges that the image includes a subject whose brightness levels are in the range of the intermediate brightness levels.

On this occasion, the function calculating means recognizes that the decrease in the contrast in the intermediate brightness level part of the image results in the deterioration of the overall contrast of the image. For this reason, the function calculating means calculates the first brightness level converting function which is expressed by a curve indicating the relation between the input brightness level and the output brightness level and includes one inflexion point. Therefore, the brightness level converting means converts, using the first brightness level converting function, the brightness levels in the image pickup signal representing the image which is judged to include one subject.

In this manner, the brightness level converting apparatus can convert the brightness levels in the image pickup signal, by the optimal brightness level converting means corresponding to the subject in the image having been picked up.

Preferably, the brightness level converting apparatus of the present invention further comprises: bright region pixel address dispersion calculating means for calculating as a bright region pixel address dispersion a dispersion, in an image represented by the image pickup signal, of pixel addresses of pixels each of whose brightness level is higher than a predetermined first bright region standard brightness level; bright region pixel average brightness level calculating means for calculating as a bright region pixel average brightness level, an average value of the brightness levels of pixels which are included in the image represented by the image pickup signal and each of whose brightness level is higher than a predetermined second bright region standard brightness level; dark region peak brightness level calculating means for calculating as a dark region peak brightness level, the brightness level of the pixel belonging to a largest number of pixels in a range, in the histogram, to which the brightness levels each of which is lower than a predetermined dark region standard brightness level belong; and intermediate brightness level calculating means for calculating an intermediate brightness level that is an intermediate value of the bright region pixel average brightness level and the dark region peak brightness level, and said function calculating means calculating the first brightness level converting function if the bright region pixel address dispersion is larger than a predetermined second standard pixel address dispersion or if the number of pixels each of whose brightness level is the intermediate brightness level is larger than a predetermined standard number of pixels.

According to the arrangement above, when the bright region pixel address dispersion is larger than the predetermined second standard pixel address dispersion, the function calculating means judges that the pixels each having not less than a predetermined brightness level are not adjacent to each other and hence the pixels are dispersed. In this case, the function calculating means judges that the image having been picked up includes a subject whose brightness levels are in the intermediate range. In the meanwhile, when, according to the histogram, the number of pixels having the intermediate brightness levels is larger than the predetermined standard number of pixels, the function calculating means judges that the number of the pixels having the intermediate brightness levels is larger than a predetermined number in the image having been picked up. Also in this case, the function calculating means judges that the image having been picked up includes a subject whose brightness levels are in the intermediate range.

In any case, if it is judged that the subject whose brightness levels are in the intermediate range is included in the image having been picked up, the function calculating means recognizes that the decrease in the contrast in the intermediate brightness level part of the image results in the deterioration of the overall contrast of the image. For this reason, the function calculating means calculates the first brightness level converting function expressed by a curve indicating the relation between the input brightness level and the output brightness level and including one inflexion point. Therefore, the brightness level converting means converts, using the first brightness level converting function, the brightness levels in the image pickup signal representing the image which is judged to include one subject.

In this manner, the brightness level converting apparatus can convert the brightness levels in the image pickup signal by the optimal brightness level converting means corresponding to the subject in the image.

Preferably, the brightness level converting apparatus of the present invention further comprises: bright region pixel average brightness level calculating means for calculating as a bright region pixel average brightness level, an average value of the brightness levels of pixels which are included in the image represented by the image pickup signal and each of whose brightness level is higher than a predetermined bright region standard brightness level; dark region peak brightness level calculating means for calculating as a dark region peak brightness level, the brightness level of the pixel belonging to a largest number of pixels in a range, in the histogram, to which the brightness levels each of which is lower than a predetermined dark region standard brightness level belong; and intermediate brightness level calculating means for calculating an intermediate brightness level that is an intermediate value of the bright region pixel average brightness level and the dark region peak brightness level, and said function calculating means calculating the second brightness level converting function if the number of pixels each of whose brightness level is the intermediate brightness level in the histogram is smaller than a predetermined standard number of pixels.

According to the arrangement above, when the bright region pixel address dispersion is smaller than the second standard pixel address dispersion, the function calculating means judges that the pixels having not less than a predetermined brightness level are adjacent to each other in the image having been picked up, and hence the pixels indicate, as a chunk, a certain meaning. Also, when, according to the histogram, the number of pixels having intermediate brightness levels is smaller than the predetermined standard number of pixels, it is judged that the number of pixels having the intermediate brightness levels is not enough in the image. If both of these conditions are satisfied, the function calculating means judges that the image includes both a dark subject and a bright subject. Furthermore, it is judged that, in the image having been picked up, the distribution of the brightness levels in the dark subject and the distribution of the brightness levels in the bright subject are both not wider than predetermined values, respectively.

In this case, the function calculating means recognizes that, even if the contrast in the intermediate brightness level part of the image having been picked up decreases, the overall contrast of the image is not deteriorated. Therefore, the function calculating means calculates the second brightness level converting function expressed by a curve which indicates the relation between the input brightness level and the output brightness level and includes (I) one inflexion point corresponding to the brightness level conversion of the dark subject and (II) one inflexion point corresponding to the brightness level conversion of the bright subject. On this account, the brightness level converting means converts, using the second brightness level converting function, the brightness levels in the image pickup signal representing the image which is judged to include two subjects.

In this manner, the brightness level converting apparatus can convert the brightness levels in the image pickup signal by the optimal brightness level converting means corresponding to the subject in the image having been picked up.

Preferably, the brightness level converting apparatus of the present invention further comprises: bright region pixel address dispersion calculating means for calculating as a bright region pixel address dispersion a dispersion, in an image represented by the image pickup signal, of pixel addresses of pixels each of whose brightness level is higher than a predetermined first bright region standard brightness level; bright region pixel average brightness level calculating means for calculating as a bright region pixel average brightness level, an average value of the brightness levels of pixels which are included in the image represented by the image pickup signal and each of whose brightness level is higher than a predetermined second bright region standard brightness level; dark region peak brightness level calculating means for calculating as a dark region peak brightness level, the brightness level of the pixel belonging to a largest number of pixels in a range, in the histogram, to which the brightness levels each of which is lower than a predetermined dark region standard brightness level belong; and intermediate brightness level calculating means for calculating an intermediate brightness level that is an intermediate value of the bright region pixel average brightness level and the dark region peak brightness level, and said function calculating means calculating the second brightness level converting function if the bright region pixel address dispersion is smaller than a predetermined second standard pixel address dispersion and the number of pixels each of whose brightness level is the intermediate brightness level is smaller than a predetermined standard number of pixels.

According to the arrangement above, when the bright region pixel address dispersion is smaller than the predetermined second standard pixel address dispersion, the function calculating means judges that the pixels having not less than a predetermined brightness level are adjacent to each other in the image having been picked up, and the pixels indicate, as a chunk, a certain meaning. Also, when, according to the histogram, the number of pixels having intermediate brightness levels is smaller than the predetermined standard number of pixels, it is judged that the number of pixels having the intermediate brightness levels is not enough in the image. If both of these conditions are satisfied, the function calculating means judges that the image includes both a dark subject and a bright subject. Furthermore, it is judged that, in the image having been picked up, the distribution of the brightness levels in the dark subject and the distribution of the brightness levels in the bright subject are both not wider than predetermined values, respectively.

In this case, the function calculating means recognizes that, even if the contrast in the intermediate brightness level part of the image having been picked up decreases, the overall contrast of the image is not deteriorated. Therefore, the function calculating means calculates the second brightness level converting function expressed by a curve which indicates the relation between the input brightness level and the output brightness level and includes (I) one inflexion point corresponding to the brightness level conversion of the dark subject and (II) one inflexion point corresponding to the brightness level conversion of the bright subject. On this account, the brightness level converting means converts, using the second brightness level converting function, the brightness levels in the image pickup signal representing the image including two subjects.

In this manner, the brightness level converting apparatus can convert the brightness levels in the image pickup signal by the optimal brightness level converting means corresponding to the subject in the image having been picked up.

To achieve the above-described object, a solid-state image pickup apparatus of the present invention is characterized by comprising one of the above-described brightness level converting apparatuses.

According to the arrangement above, it is possible to provide a solid-state image pickup apparatus which can improve the contrast of an image represented by an image pickup signal supplied from a logarithmic conversion solid-state image pickup device, so as to produce a natural-looking image.

The above-described brightness level converting apparatuses may be realized using a computer. In such a case, the scope of the present invention includes (I) a brightness level converting program that causes the computer to function as the aforesaid means so as to realize the brightness level converting apparatus on the computer, and (II) a computer-readable recording medium storing the brightness level converting program.

As described above, the brightness level converting apparatus of the present invention includes brightness level converting means that converts the brightness levels in an image pickup signal, using a brightness level converting function expressed by a curve that represents the relation between an input brightness level and an output brightness level and includes at least one inflexion point. On this account, the brightness level converting apparatus can improve the contrast of an image represented by an image pickup signal supplied from a logarithmic conversion solid-state image pickup device, so as to produce a natural-looking image.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

**Claims**

1. A brightness level converting apparatus (3) which converts brightness levels in an image pickup signal output from a solid-state image pickup device (2) which logarithmically converts an incident light quantity, the brightness level converting apparatus (3) comprising
   brightness level converting means (7) for converting the brightness levels in the image pickup signal by using a brightness level converting function expressed by a curve which indicates a relation between an input brightness level and an output brightness level and includes at least one inflexion point.

2. The brightness level converting apparatus (3) as set forth in claim 1, wherein the brightness level converting function is expressed by an S-shaped curve which indicates the relation between the input brightness level and the output brightness level and includes one inflexion point.

3. The brightness level converting apparatus (3) as set forth in claim 2, wherein the brightness level converting function is a sigmoid function.

4. The brightness level converting apparatus (3) as set forth in claim 2, wherein the brightness level converting function is a quadratic function.

5. The brightness level converting apparatus (3) as set forth in claim 2, further comprising function calculating means (6) for calculating the brightness level converting function on the basis of a characteristic of the image pickup signal, and
   said brightness level converting means (7) converting the brightness levels in the image pickup signal by using the brightness level converting function calculated by said function calculating means (6).

6. The brightness level converting apparatus (3) as set forth in claim 5, further comprising histogram calculating means (31) for calculating a histogram which indicates a relation in the image pickup signal between the brightness level and the number of pixels, and
   said function calculating means (6) calculating the brightness level converting function on the basis of the histogram calculated by said histogram calculating means (31).

7. The brightness level converting apparatus (3) as set forth in claim 6, further comprising histogram smoothing means (32) for smoothing the histogram.

8. The brightness level converting apparatus (3) as set forth in claim 6, further comprising:

   first cumulative number-of-pixels calculating means (38) for calculating a first cumulative number of pixels by cumulatively counting the number of pixels each of whose brightness level is within a range from a lowest brightness level to a first standard brightness level in the histogram;
   first low brightness reference level calculating means (38) for calculating the first standard brightness level as a first low brightness reference level if the first cumulative number of pixels exceeds a predetermined first standard number of pixels;
   second cumulative number-of-pixels calculating means (35) for calculating a second cumulative number of pixels by cumulatively counting the number of pixels each of whose brightness level is within a range from a second standard brightness level to a highest brightness level in the histogram; and
   first high brightness reference level calculating means (35) for calculating the second standard brightness level as a first high brightness reference level if the second cumulative number of pixels exceeds a predetermined second standard number of pixels, and
   said function calculating means (6) calculating the brightness level converting function on the basis of the first low brightness reference level and the first high brightness reference level.

9. The brightness level converting apparatus (3) as set forth in claim 8, wherein the predetermined first standard number of pixels is a value that is 0.05 % to 0.5 % of a total cumulative number of pixels in the histogram.

10. The brightness level converting apparatus (3) as set forth in claim 8, wherein the predetermined second standard number of pixels is a value that is 0.05 % to 0.5 % of a total cumulative number of pixels in the histogram.

11. The brightness level converting apparatus (3) as set forth in claim 8, further comprising:

37

dark region pixel address dispersion calculating means (37) for calculating as a dark region pixel address dispersion a dispersion, in the image pickup signal, of pixel addresses of pixels each of whose brightness level is lower than a predetermined dark region standard brightness level;

dark region pixel address dispersion judging means (38) for judging whether or not the dark region pixel address dispersion is larger than a predetermined first standard pixel address dispersion; and

first standard number-of-pixels setting means (38) for, if a judgment result obtained by said dark region pixel address dispersion judging means is true, setting the predetermined first standard number of pixels so that the predetermined first standard number of pixels has a value that is larger than a predetermined value.

**12.** The brightness level converting apparatus (3) as set forth in claim 8, further comprising:

bright region pixel address dispersion calculating means (34) for calculating as a bright region pixel address dispersion a dispersion, in an image represented by the image pickup signal, of pixel addresses of pixels each of whose brightness level is higher than a predetermined bright region standard brightness level;

bright region pixel address dispersion judging means (35) for judging whether or not the bright region pixel address dispersion is larger than a predetermined second standard pixel address dispersion; and

second standard number-of-pixels setting means (35) for, if a judgment result obtained by said bright region pixel address dispersion judging means is true, setting the predetermined second standard number of pixels so that the predetermined second standard number of pixels has a value that is larger than a predetermined value.

**13.** The brightness level converting apparatus (3) as set forth in claim 11, further comprising:

third cumulative number-of-pixels calculating means (36) for calculating a third cumulative number of pixels by cumulatively counting the number of pixels each of whose brightness level is within a range from the lowest brightness level to a third standard brightness level in the histogram; and

dark region standard brightness level calculating means (36) for calculating the third standard brightness level as the dark region standard brightness level if the third cumulative number of pixels exceeds a predetermined third standard number of pixels.

**14.** The brightness level converting apparatus (3) as set forth in claim 13, wherein the predetermined third standard number of pixels is a value that is 0.5 % to 1.5 % of a total cumulative number of pixels in the histogram.

**15.** The brightness level converting apparatus (3) as set forth in claim 12, further comprising:

fourth cumulative number-of-pixels calculating means (33) for calculating a fourth cumulative number of pixels by cumulatively counting the number of pixels each of whose brightness level is within a range from a fourth standard brightness level to the highest brightness level in the histogram; and

bright region standard brightness level calculating means (33) for calculating the fourth standard brightness level as the bright region standard brightness level if the fourth cumulative number of pixels exceeds a predetermined fourth standard number of pixels.

**16.** The brightness level converting apparatus (3) as set forth in claim 15, wherein the predetermined fourth standard number of pixels is a value that is 0.5 % to 1.5 % of a total cumulative number of pixels in the histogram.

**17.** The brightness level converting apparatus (3) as set forth in claim 8, further comprising:

second low brightness reference level calculating means (39) for calculating a second low brightness reference level by subtracting from the first low brightness reference level, a value obtained by multiplying a difference value between the first high brightness reference level and the first low brightness reference level by a predetermined first coefficient; and

second high brightness reference level calculating means (39) for calculating a second high brightness reference level by adding to the first high brightness reference level, a value obtained by multiplying the difference value between the first high brightness reference level and the first low brightness reference level by a predetermined second coefficient, and

said function calculating means (6) calculating the brightness level converting function on the basis of the second low brightness reference level and the second high brightness reference level.

**18.** The brightness level converting apparatus (3) as set forth in claim 17, wherein the predetermined first coefficient has a value in a range from 0.1 to 0.6.

19. The brightness level converting apparatus (3) as set forth in claim 18, wherein the predetermined first coefficient is approximately 0.5.

20. The brightness level converting apparatus (3) as set forth in claim 17, wherein the predetermined second coefficient has a value in a range from 0.1 to 0.6.

21. The brightness level converting apparatus (3) as set forth in claim 20, wherein the predetermined second coefficient is approximately 0.5.

22. The brightness level converting apparatus (3) as set forth in claim 1, wherein the brightness level converting function is expressed by a curve which indicates the relation between the input brightness level and the output brightness level and includes (I) one inflexion point indicating the input brightness level that is lower than a standard brightness level and (II) one inflexion point indicating the input brightness level that is higher than the standard brightness level.

23. The brightness level converting apparatus (3) as set forth in claim 22, wherein the brightness level converting function is a weighting addition function of (I) a dark region S-shaped function expressed by an S-shaped curve which includes one inflexion point and indicates the relation between the input brightness level and the output brightness level in a dark region to which the brightness levels each of which is lower than the standard brightness level belong and (II) a bright region S-shaped function expressed by an S-shaped curve which includes one inflexion point and indicates the relation between the input brightness level and the output brightness level in a bright region to which the brightness levels each of which is higher than the standard brightness level belong.

24. The brightness level converting apparatus (3) as set forth in claim 23, wherein the dark region S-shaped function is a sigmoid function.

25. The brightness level converting apparatus (3) as set forth in claim 23, wherein the bright region S-shaped function is a sigmoid function.

26. The brightness level converting apparatus (3) as set forth in claim 23, further comprising function calculating means (6) for calculating the brightness level converting function by weighting, using a predetermined weighting coefficient, the dark region S-shaped function and the bright region S-shaped function on the basis of a characteristic of the image pickup signal, and
said brightness level converting means (7) converting the brightness levels in the image pickup signal by using the brightness level converting function calculated by said function calculating means (6).

27. The brightness level converting apparatus (3) as set forth in claim 23, further comprising histogram calculating means (501) for calculating a histogram which indicates a relation between the brightness level and the number of pixels in the image pickup signal, and
said function calculating means (6) calculating the brightness level converting function on the basis of the histogram calculated by said histogram calculating means (501).

28. The brightness level converting apparatus (3) as set forth in claim 27, further comprising:

first cumulative number-of-pixels calculating means (508) for calculating a first cumulative number of pixels by cumulatively counting the number of pixels each of whose brightness level is within a range from a lowest brightness level to a first standard brightness level in the histogram;
low brightness reference level calculating means (508) for calculating the first standard brightness level as a low brightness reference level if the first cumulative number of pixels exceeds a predetermined first standard number of pixels;
second cumulative number-of-pixels calculating means (505) for calculating a second cumulative number of pixels by cumulatively counting the number of pixels each of whose brightness level is within a range from a second standard brightness level to a highest brightness level in the histogram;
high brightness reference level calculating means (505) for calculating the second standard brightness level as a high brightness reference level if the second cumulative number of pixels exceeds a predetermined second standard number of pixels;
bright region pixel average brightness level calculating means (511) for calculating as a bright region pixel average brightness level, an average value of the brightness levels of pixels which are included in the image and each of whose brightness level is higher than a predetermined bright region standard brightness level;

dark region peak brightness level calculating means (510) for calculating as a dark region peak brightness level, the brightness level of the pixel belonging to a largest number of pixels in a range, in the histogram, to which the brightness levels each of which is lower than a predetermined dark region standard brightness level belong; and

intermediate brightness level calculating means (512) for calculating an intermediate brightness level that is an intermediate value of the bright region pixel average brightness level and the dark region peak brightness level, and

said function calculating means (6) calculating the brightness level converting function by (I) calculating the dark region S-shaped function and the bright region S-shaped function on the basis of the low brightness reference level, the high brightness reference level and the intermediate brightness level and (II) weighting, using the predetermined weighting coefficient, the dark region S-shaped function calculated and the bright region S-shaped function calculated.

29. The brightness level converting apparatus (3) as set forth in claim 1, further comprising function calculating means (6) for calculating on the basis of a characteristic of the image pickup signal (I) a first brightness level converting function expressed by an S-shaped curve which indicates the relation between the input brightness level and the output brightness level and includes one inflexion point or (II) a second brightness level converting function expressed by a curve which indicates the relation between the input brightness level and the output brightness level and includes (i) one inflexion point indicating the input brightness level that is lower than a standard brightness level and (ii) one inflexion point indicating the input brightness level that is higher than the standard brightness level, and

said brightness level converting means (7) converting the brightness levels in the image pickup signal by using the first brightness level converting function or the second brightness level converting function calculated by said function calculating means (6).

30. The brightness level converting apparatus (3) as set forth in claim 29, further comprising histogram calculating means (501) for calculating a histogram which indicates a relation between the brightness level and the number of pixels in the image pickup signal, and

said function calculating means (6) calculating the first brightness level converting function or the second brightness level converting function on the basis of the histogram calculated by said histogram calculating means (501).

31. The brightness level converting apparatus (3) as set forth in claim 30, further comprising:

bright region pixel average brightness level calculating means (511) for calculating as a bright region pixel average brightness level, an average value of the brightness levels of pixels which are included in the image represented by the image pickup signal and each of whose brightness level is higher than a predetermined bright region standard brightness level;

dark region peak brightness level calculating means (510) for calculating as a dark region peak brightness level, the brightness level of the pixel belonging to a largest number of pixels in a range, in the histogram, to which the brightness levels each of which is lower than a predetermined dark region standard brightness level belong; and

intermediate brightness level calculating means (512) for calculating an intermediate brightness level that is an intermediate value of the bright region pixel average brightness level and the dark region peak brightness level, and

said function calculating means (6) calculating the first brightness level converting function if the number of pixels each of whose brightness level is the intermediate brightness level in the histogram is larger than a predetermined standard number of pixels.

32. The brightness level converting apparatus (3) as set forth in claim 30, further comprising:

bright region pixel address dispersion calculating means (504) for calculating as a bright region pixel address dispersion a dispersion, in an image represented by the image pickup signal, of pixel addresses of pixels each of whose brightness level is higher than a predetermined first bright region standard brightness level;

bright region pixel average brightness level calculating means (511) for calculating as a bright region pixel average brightness level, an average value of the brightness levels of pixels which are included in the image represented by the image pickup signal and each of whose brightness level is higher than a predetermined second bright region standard brightness level;

dark region peak brightness level calculating means (510) for calculating as a dark region peak brightness level, the brightness level of the pixel belonging to a largest number of pixels in a range, in the histogram, to which the brightness levels each of which is lower than a predetermined dark region standard brightness level belong; and

intermediate brightness level calculating means (512) for calculating an intermediate brightness level that is an intermediate value of the bright region pixel average brightness level and the dark region peak brightness level, and

said function calculating means (6) calculating the first brightness level converting function if the bright region pixel address dispersion is larger than a predetermined second standard pixel address dispersion or if the number of pixels each of whose brightness level is the intermediate brightness level is larger than a predetermined standard number of pixels.

33. The brightness level converting apparatus (3) as set forth in claim 30, further comprising:

bright region pixel average brightness level calculating means (511) for calculating as a bright region pixel average brightness level, an average value of the brightness levels of pixels which are included in the image represented by the image pickup signal and each of whose brightness level is higher than a predetermined bright region standard brightness level;

dark region peak brightness level calculating means (510) for calculating as a dark region peak brightness level, the brightness level of the pixel belonging to a largest number of pixels in a range, in the histogram, to which the brightness levels each of which is lower than a predetermined dark region standard brightness level belong; and

intermediate brightness level calculating means (512) for calculating an intermediate brightness level that is an intermediate value of the bright region pixel average brightness level and the dark region peak brightness level, and

said function calculating means (6) calculating the second brightness level converting function if the number of pixels each of whose brightness level is the intermediate brightness level in the histogram is smaller than a predetermined standard number of pixels.

34. The brightness level converting apparatus (3) as set forth in claim 30, further comprising:

bright region pixel address dispersion calculating means (504) for calculating as a bright region pixel address dispersion a dispersion, in an image represented by the image pickup signal, of pixel addresses of pixels each of whose brightness level is higher than a predetermined first bright region standard brightness level;

bright region pixel average brightness level calculating means (511) for calculating as a bright region pixel average brightness level, an average value of the brightness levels of pixels which are included in the image represented by the image pickup signal and each of whose brightness level is higher than a predetermined second bright region standard brightness level;

dark region peak brightness level calculating means (510) for calculating as a dark region peak brightness level, the brightness level of the pixel belonging to a largest number of pixels in a range, in the histogram, to which the brightness levels each of which is lower than a predetermined dark region standard brightness level belong; and

intermediate brightness level calculating means (512) for calculating an intermediate brightness level that is an intermediate value of the bright region pixel average brightness level and the dark region peak brightness level, and

said function calculating means (6) calculating the second brightness level converting function if the bright region pixel address dispersion is smaller than a predetermined second standard pixel address dispersion and the number of pixels each of whose brightness level is the intermediate brightness level is smaller than a predetermined standard number of pixels.

35. A brightness level converting method for converting brightness levels in an image pickup signal output from a solid-state image pickup device (2) which logarithmically converts an incident light quantity, the brightness level converting method comprising a brightness level converting step of converting the brightness levels in the image pickup signal by using a brightness level converting function expressed by a curve which indicates a relation between an input brightness level and an output brightness level and includes at least one inflexion point.

36. A solid-state image pickup apparatus (1) comprising the brightness level converting apparatus (3) as set forth in any one of claims 1 to 34.

37. A brightness level converting program for causing the brightness level converting apparatus (3) as set forth in any one of claims 1 to 34 to operate, the program causing a computer to function as said respective means of the brightness level converting apparatus (3).

38. A brightness level converting program comprising program code means for causing a computer to execute the steps of the brightness level converting method according to claim 35.

39. A computer-readable recording medium storing the brightness level converting program as set forth in claim 37 or claim 38.

INCIDENT LIGHT

**FIG. 1**

SOLID-STATE IMAGE PICKUP DEVICE `2`

IMAGE CHARACTERISTIC EXTRACTING SECTION `5`

CONVERTING FUNCTION CALCULATING SECTION `6`

BRIGHTNESS LEVEL CONVERTING SECTION `7`

`3`

`1`

IMAGE DISPLAYING APPARATUS `4`

# FIG. 2

## FIG. 3(a)

## FIG. 3(b)

## FIG. 4

## FIG. 5

46

FIG. 6

SOLID-STATE IMAGE PICKUP DEVICE — 2

CONVERTING FUNCTION CALCULATING SECTION — 6

5

30 — PIXEL BLOCK BRIGHTNESS LEVEL CALCULATING SECTION

31 — HISTOGRAM CALCULATING SECTION

32 — HISTOGRAM MOVING AVERAGE PROCESSING SECTION

33 — BRIGHT REGION PIXEL BLOCK SEARCHING SECTION

34 — BRIGHT REGION ADDRESS DISPERSION CALCULATING SECTION

35 — HIGH BRIGHTNESS REFERENCE LEVEL CALCULATING SECTION

36 — DARK REGION PIXEL BLOCK SEARCHING SECTION

37 — DARK REGION ADDRESS DISPERSION CALCULATING SECTION

38 — LOW BRIGHTNESS REFERENCE LEVEL CALCULATING SECTION

39 — SCALING OPERATING SECTION

FIG. 7

FIG. 8(a)

FIG. 8(b)

FIG. 9

INPUT BRIGHTNESS LEVEL

# FIG. 10

FIG. 11 (a)

FIG. 11 (b)

FIG. 12(a)

FIG. 12(b)

FIG. 13

FIG. 14

FIG. 15

## FIG. 16

## FIG. 17

# FIG. 18

# FIG. 19

INPUT BRIGHTNESS LEVEL

FIG. 20

INPUT BRIGHTNESS LEVEL

FIG. 21

INPUT BRIGHTNESS LEVEL

# FIG. 22

- SOLID-STATE IMAGE PICKUP DEVICE — 2
- PIXEL BLOCK BRIGHTNESS LEVEL CALCULATING SECTION — 500
- HISTOGRAM CALCULATING SECTION — 501
- DARK REGION PIXEL BLOCK SEARCHING SECTION — 506
- HISTOGRAM MOVING AVERAGE PROCESSING SECTION — 502
- HISTOGRAM PEAK DETECTING SECTION — 510
- BRIGHT REGION BRIGHTNESS LEVEL AVERAGE CALCULATING SECTION — 511
- BRIGHT REGION PIXEL BLOCK SEARCHING SECTION — 503
- DARK REGION ADDRESS DISPERSION CALCULATING SECTION — 507
- INTERMEDIATE BRIGHTNESS LEVEL CALCULATING SECTION — 512
- BRIGHT REGION ADDRESS DISPERSION CALCULATING SECTION — 504
- LOW BRIGHTNESS REFERENCE LEVEL CALCULATING SECTION — 508
- HIGH BRIGHTNESS REFERENCE LEVEL CALCULATING SECTION — 505
- CONVERSION METHOD JUDGING SECTION — 513
- SCALING OPERATING SECTION — 509
- CONVERTING FUNCTION CALCULATING SECTION — 6
- 5

# FIG. 23

## FIG. 24 (a)

## FIG. 24 (b)

FIG. 25 (a)

FIG. 25 (b)

FIG. 26

FIG. 27